# FASCICULE DE BREVET EUROPEEN

(11) **EP 3 542 563 B1**
(45) Date de publication et mention de la délivrance du brevet: **11.11.2020**
(21) Numéro de dépôt: 17812007.7
(22) Date de dépôt: 20.11.2017
(51) Int. Cl.: H04W 8/20

(54) **INSTALLATION D'UN PROFIL DANS UN MODULE D'IDENTITÉ DE SOUSCRIPTEUR EMBARQUE**
INSTALLATION EINES PROFILS IN EINEM EINGEBETTETEN TEILNEHMERIDENTITÄTSMODUL
INSTALLATION OF A PROFILE IN AN EMBEDDED SUBSCRIBER IDENTITY MODULE

(30) Priorité: 21.11.2016 FR 1661289
(43) Date de publication de la demande: 25.09.2019
(73) Titulaire: IDEMIA France, 92400 Courbevoie (FR)
(72) Inventeur: DUMOULIN, Jérôme, 92400 Courbevoie (FR); MICHEL, Alexis, 92400 Courbevoie (FR)
(74) Mandataire: Cabinet Beau de Loménie
(86) Numéro de dépôt international: PCT/FR2017/053173
(87) Numéro de publication internationale: WO 2018/091853

(56) Documents cités:
- EP-A1- 2 963 955
- EP-A1- 3 029 968
- V3 Gsma ET AL: "GSM Association Non-confidential Official Document SGP.02 -Remote Provisioning Architecture for Embedded UICC Technical Specification Remote Provisioning Architecture for Embedded UICC Technical Specification Security Classification: Non-confidential GSM Association Non-confidential Remote Provision", , 27 mars 2016 (2016-03-27), XP055368122, Extrait de l'Internet: URL:http://www.gsma.com/newsroom/wp-conten t/uploads//SGP.02_v3.1.pdf [extrait le 2017-04-27]

## Description

### Arrière-plan de l'invention

La présente invention porte sur le domaine des modules d'identité de souscripteur embarqués appelés aussi modules eUICC (pour « *embedded Universal Integrated Circuit Chip* »), et concerne plus particulièrement de tels modules eUICC aptes à gérer des profils de communication.

De façon connue, une carte SIM conventionnelle est configurée pour permettre à un terminal de communication (tel qu'un téléphone portable par exemple), avec lequel elle coopère, d'utiliser le réseau de communication d'un seul opérateur de téléphonie. Pour ce faire, la carte SIM comprend des données de souscription comme par exemple un identifiant IMSI (pour « *International Mobile Subscriber Identity* »), des clés cryptographiques et des algorithmes propres à l'opérateur associé. Ces données de souscription sont stockées de façon permanente dans une mémoire morte.

Lorsqu'un téléphone portable tente d'utiliser les services d'un réseau cellulaire, il envoie toutes les données de souscription, stockées dans la carte SIM, nécessaires à l'opérateur du réseau pour obtenir l'accès aux services requis. L'opérateur peut ainsi authentifier l'utilisateur et vérifier à l'aide d'une base de données HLR (pour « *Home Location Register»)* que celui-ci a bien souscrit au service demandé. Dans l'affirmative, l'opérateur autorise alors l'accès au téléphone portable embarquant la carte SIM dont les données ont été utilisées pour l'authentification et l'enregistrement auprès du réseau de l'opérateur.

Par ailleurs, on connaît aujourd'hui les cartes SIM reprogrammables, et plus particulièrement les modules d'identité de souscripteur embarqués, appelés aussi modules eUICC. Ces modules reprogrammables permettent à un utilisateur de changer d'opérateur sans avoir à remplacer physiquement la carte SIM dans le téléphone portable. Les principales spécifications d'un module eUICC sont définies par le groupe GSMA (pour « *Global System for Mobile Communications Association* ») dans le standard GSMA SGP.02 v3.1 intitulé « Remote Provisioning Architecture for Embedded UICC - Technical Specification - Version 3.1 » datant du 27 mai 2016. Un module eUICC est un élément matériel sécurisé, généralement de petite taille, pouvant être intégré dans un terminal de communication (dans un terminal mobile par exemple) afin de mettre en œuvre les fonctions d'une carte SIM traditionnelle.

En particulier, un module eUICC est apte à contenir un ou plusieurs profils de communication (appelés aussi par la suite « profils »). Chaque profil est contenu dans un domaine sécurisé dédié nommé ISD-P conformément audit standard GSMA. Lorsqu'un profil de communication est actif, il permet au terminal de communication dans lequel il est embarqué d'accéder de façon sécurisée au réseau de communication d'un opérateur associé, ainsi qu'aux services définis par le profil en question. En changeant le profil de communication actif dans le module eUICC, il est possible de changer d'opérateur ou de modifier l'accès à des services associés (services voix et/ou de données par exemple).

Il est aujourd'hui possible pour un module eUICC, embarqué dans un terminal de communication, de recevoir à distance un nouveau profil de communication. La fourniture d'un tel profil est généralement initiée par l'opérateur du réseau de communication associé au profil, au moyen par exemple d'un serveur SM-SR en charge de la gestion à distance des profils dans le module eUICC.

Une fois reçu, le module eUICC installe le profil afin de permettre au terminal de communiquer avec le réseau de communication associé au profil lorsque ce dernier est à l'état actif dans ledit terminal.

La norme SIMALLIANCE intitulée « eUICC Profile Package : Interoperable Format Technical Specification » (version 2.0) datant du 18 avril 2016 (nommée par la suite simplement « SIMALLIANCE ») spécifie en particulier la structure d'un profil de communication lors d'une phase de chargement dans un terminal et la manière dont un module eUICC récupère à distance un tel profil et procède à son installation.

La norme SIMALLIANCE prévoit notamment qu'un profil est envoyé à un module eUICC sous la forme d'une pluralité d'éléments de profil (dits « *Profile Elements* » ou PE en anglais). Ces éléments de profil sont définis dans un langage descriptif (nommé ASN.1) interprétable par le module eUICC, ce langage étant défini conjointement par l'organisation internationale de normalisation, la commission électrotechnique internationale et l'union internationale des télécommunications.

Le premier élément de profil envoyé au module eUICC lors du téléchargement à distance est généralement un en-tête du profil (dit PEH pour « *Profil Element Header* » en anglais). Conformément à la norme SIMALLIANCE, cet en-tête de profil contient un certain nombre d'informations concernant le profil correspondant, notamment une liste des services du profil devant être supportés par le module eUICC destinataire.

Toujours selon la norme SIMALLIANCE, chaque service du profil est spécifié dans la liste de services de l'en-tête comme étant obligatoire ou facultatif selon le niveau d'importance du service considéré. Si un service du profil est spécifié comme obligatoire dans l'en-tête, il est impératif que le module eUICC destinataire du profil supporte le service en question, faute de quoi le profil est refusé par le module eUICC et le processus d'installation est abandonné.

Par conséquent, un problème existe aujourd'hui en ce qu'une installation d'un profil dans un module eUICC est susceptible d'échouer si ledit module eUICC n'est pas capable de mettre en œuvre certains services, notamment des services spécifiés comme obligatoires dans l'entête dudit profil. L'échec d'une installation de profil est indésirable dans la mesure où des ressources ont été sollicitées en vain et du fait que, ni l'opérateur, ni l'utilisateur du terminal, ne peuvent bénéficier d'un nouveau profil lorsque ce dernier nécessite la mise en œuvre d'un service non supporté par le module eUICC. Il en résulte un manque de flexibilité et un risque d'obsolescence prématuré pour les modules eUICC.

Aucune solution satisfaisante ne permet aujourd'hui de palier les problèmes mentionnés ci-dessus et, plus généralement, de gérer efficacement l'installation d'un profil de communication dans un module d'identité de souscripteur embarqué (ou module eUICC).

Le document EP 3 029 968 A1 datant du 8 juin 2016 divulgue un procédé de provisionnement d'un profil de souscripteur dans un module sécurisé. Le procédé comprend la réception d'une requête de provisionnement d'un profil de souscripteur accompagné de paramètres d'un terminal mobile associés au profil de souscripteur, la configuration du terminal lorsqu'une notification d'activation du profil est reçue, la notification étant issue du module sécurisé.

Le document intitulé « GSM Association Non-Confidential Officiai Document SGP.02 - Remote Provisioning Architecture for Embedded UICC Technical Spécification Remote Provisioning Architecture for Embedded UICC Technical Spécification Security Classification: Non-confidential GSM Association Non-Confidential Remote Provision" datant du 27 mars 2016 divulgue un système permettant la mise à jour de profils de carte eUICC.

### Objet et résumé de l'invention / Résumé

A cet effet, la présente invention concerne un premier procédé de contrôle mis en œuvre par un module d'identité de souscripteur embarqué (ou module eUICC) apte à coopérer avec un terminal de communication, ledit module électronique comprenant :
- réception d'au moins un identifiant d'un service respectif, d'un profil de communication, à mettre en oeuvre lorsque ledit profil de communication est installé et à l'état actif dans le module d'identité de souscripteur embarqué ;
- détermination de si chaque service est supporté par un système d'exploitation du module d'identité de souscripteur embarqué ;
- dans la négative, envoi d'une requête de mise à jour du système d'exploitation ;
- si une mise à jour du système d'exploitation est reçue en réponse audit envoi, installation de ladite mise à jour permettant au système d'exploitation de mettre en œuvre au moins partiellement ledit profil de communication ; et
- après achèvement de ladite installation, envoi d'une demande pour recevoir ou poursuivre la réception du profil de communication, incluant ledit au moins un service (S), à installer dans ledit module d'identité de souscripteur embarqué.

Lorsqu'un module eUICC détecte que son système d'exploitation ne supporte pas au moins un service spécifié dans un profil à installer, l'invention permet avantageusement audit module eUICC d'obtenir la mise à jour nécessaire de sorte à pallier, au moins en partie, son incapacité à mettre en œuvre ledit au moins un service non supporté. Une fois la mise à jour réalisée, le module eUICC peut installer le profil de sorte à offrir, lorsque le profil en question est à l'état actif, l'accès à l'un ou plusieurs services associés audit profil.

Selon un mode de réalisation particulier, le procédé comprend, en réponse à ladite demande pour recevoir ou poursuivre ladite réception, une réception de tout ou partie du profil de communication de sorte à permettre l'installation du profil dans le module d'identité de souscripteur embarqué.

Selon un mode de réalisation particulier, le procédé comprend l'installation du profil de communication dans le module d'identité de souscripteur embarqué une fois ledit profil obtenu dans sa totalité.

Selon un mode de réalisation particulier, ledit profil de communication autorise, lorsqu'il est installé et à l'état actif dans le module d'identité de souscripteur embarqué, le terminal de communication à communiquer avec un réseau de communication associé audit profil de communication.

Selon un mode de réalisation particulier, le procédé comprend une comparaison des capacités du système d'exploitation avec chaque service (S) associé audit au moins un identifiant ;
la détermination de si au moins un dit service n'est pas supporté par le système d'exploitation étant réalisée à partir du résultat de ladite comparaison.

Selon un mode de réalisation particulier, la réception dudit au moins un identifiant comprend la réception d'une première portion du profil de communication, ladite première portion comportant ledit au moins un identifiant.

Selon un mode de réalisation particulier, la première portion est une portion d'entête du profil de communication.

Selon un mode de réalisation particulier, le procédé comprend, après achèvement de ladite installation de la mise à jour, l'envoi de ladite demande pour poursuivre la réception du profil de communication afin de recevoir au moins une deuxième portion du profil de communication complétant ladite première portion de sorte à obtenir la totalité du profil de communication à installer dans le module d'identité de souscripteur embarqué.

Selon un mode de réalisation particulier, ledit au moins un identifiant est reçu en provenance d'un serveur de fourniture de profil, le procédé comprenant, si au moins un dit service n'est pas supporté par le système d'exploitation, l'envoi d'une demande de mise en attente au serveur de fourniture de profil afin de différer la réception d'au moins une partie du profil de communication.

Selon un mode de réalisation particulier, lors de la réception dudit au moins un identifiant, le procédé comprend :
- réception, en association avec chaque identifiant de service, d'un degré d'importance dudit service, ledit degré d'importance indiquant si le service correspondant doit obligatoirement être supporté par le système d'exploitation lorsque le profil de communication est installé dans le module d'identité de souscripteur embarqué.

Selon un mode de réalisation particulier, le module d'identité de souscripteur embarqué procède à l'envoi de ladite demande pour recevoir ou poursuivre la réception du profil de communication uniquement si le système d'exploitation, une fois mis à jour, supporte au moins chaque service du profil de communication indiqué par le degré d'importance associé comme devant être obligatoirement supporté par le système d'exploitation.

Selon un mode de réalisation particulier, si le système d'exploitation, une fois mis à jour, ne supporte pas au moins un service du profil de communication indiqué par le degré d'importance associé comme ne devant pas obligatoirement être supporté par le système d'exploitation, le module d'identité de souscripteur embarqué :
- procède à l'envoi de ladite demande pour recevoir ou poursuivre la réception du profil de communication ; et
- réalise un marquage du profil de communication, une fois ledit profil installé dans le module d'identité de souscripteur embarqué, de sorte à indiquer qu'au moins un service du profil de communication, ne devant pas être obligatoirement supporté par ledit système d'exploitation, n'est pas supporté par ledit système d'exploitation.

Selon un mode de réalisation particulier, le marquage comprend une modification, dans le profil de communication installé dans le module d'identité de souscripteur embarqué, d'un paramètre pour indiquer que le module d'identité de souscripteur embarqué est configuré pour mettre en œuvre de façon restreinte ledit au moins un service du profil de communication.

Selon un mode de réalisation particulier, si le système d'exploitation, une fois mis à jour, ne supporte pas au moins un service du profil de communication indiqué par le degré d'importance associé comme ne devant pas obligatoirement être supporté par le système d'exploitation, le procédé comprend :
- envoi d'une notification indiquant que le module d'identité de souscripteur embarqué est configuré pour mettre en œuvre ledit au moins un service du profil de communication de façon restreinte.

Selon un mode de réalisation particulier, lors de ladite réception, ledit au moins un identifiant et chaque degré d'importance associé est reçu dans un entête dudit profil de communication, ledit entête comprenant en outre un paramètre,
dans lequel, après achèvement de ladite installation, le module d'identité de souscripteur embarqué envoie ladite demande pour poursuivre la réception du profil de communication seulement si le paramètre est dans un état prédéfini.

Dans un mode particulier de réalisation, les différentes étapes du premier procédé de contrôle tel que défini ci-avant sont déterminées par des instructions de programmes d'ordinateurs.

En conséquence, l'invention vise aussi un programme d'ordinateur sur un support d'informations, ce programme étant susceptible d'être mis en œuvre dans un module d'identité de souscripteur embarqué, ou plus généralement dans un ordinateur, ce programme comportant des instructions adaptées à la mise en œuvre des étapes du premier procédé de contrôle tel que défini ci-dessus.

L'invention vise aussi un support d'enregistrement (ou support d'informations) lisible par un ordinateur, et comportant des instructions d'un programme d'ordinateur tel que mentionné ci-dessus.

Corrélativement, l'invention concerne un deuxième procédé de contrôle mis en œuvre par un serveur de fourniture de profil pour fournir un profil de communication à un module d'identité de souscripteur embarqué coopérant avec un terminal de communication, comprenant :
- envoi, audit module d'identité de souscripteur embarqué, d'au moins un identifiant d'un service respectif, d'un profil de communication, à mettre en œuvre lorsque ledit profil de communication est installé et à l'état actif dans le module d'identité de souscripteur embarqué ;
- mise en attente de l'envoi d'au moins une partie du profil de communication au module d'identité de souscripteur embarqué ;
- après mise à jour dudit système d'exploitation par le module d'identité de souscripteur embarqué, réception d'une demande d'envoi ou de poursuite d'envoi du profil de communication, incluant ledit au moins un service ; et
- en réponse à ladite demande d'envoi ou de poursuite d'envoi du profil de communication, envoi de tout ou partie du profil de communication afin de permettre l'installation dudit profil dans le module d'identité de souscripteur embarqué.

Dans un mode particulier de réalisation, les différentes étapes du deuxième procédé de contrôle tel que défini ci-avant sont déterminées par des instructions de programmes d'ordinateurs.

En conséquence, l'invention vise aussi un programme d'ordinateur sur un support d'informations, ce programme étant susceptible d'être mis en œuvre dans un serveur, ou plus généralement dans un ordinateur, ce programme comportant des instructions adaptées à la mise en oeuvre des étapes du deuxième procédé de contrôle tel que défini ci-dessus.

L'invention vise aussi un support d'enregistrement (ou support d'informations) lisible par un ordinateur, et comportant des instructions d'un programme d'ordinateur tel que mentionné ci-dessus.

A noter que les programmes mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention vise également un module d'identité de souscripteur embarqué configuré pour mettre en œuvre le premier procédé de contrôle tel que défini ci-avant. Plus spécifiquement, l'invention concerne un module d'identité de souscripteur embarqué (ou module eUICC) apte à coopérer avec un terminal de communication, ledit module d'identité de souscripteur embarqué comprenant :
- un module de réception configuré pour recevoir au moins un identifiant d'un service respectif, d'un profil de communication, à mettre en œuvre lorsque ledit profil de communication est installé et à l'état actif dans le module d'identité de souscripteur embarqué ;
- un module de détermination configuré pour déterminer si chaque service est supporté par un système d'exploitation du module d'identité de souscripteur embarqué ;
- un module de mise à jour configuré, si chaque service n'est pas supporté par ledit système d'exploitation, pour envoyer une requête de mise à jour du système d'exploitation,
   ledit module de mise à jour étant configuré, si une mise à jour du système d'exploitation est reçue en réponse à ladite requête de mise à jour, pour installer ladite mise à jour permettant au système d'exploitation de mettre en œuvre au moins partiellement ledit profil de communication ; et
- un module d'envoi configuré, après achèvement de ladite installation de mise à jour, pour envoyer une demande pour recevoir ou poursuivre la réception du profil de communication, incluant ledit au moins un service, à installer dans ledit module d'identité de souscripteur embarqué.

On notera que les différents modes de réalisation mentionnés ci-avant en relation avec le premier procédé de contrôle de l'invention ainsi que les avantages associés s'appliquent de façon analogue au module d'identité de souscripteur embarqué de l'invention.

L'invention vise également un serveur de fourniture de profil configuré pour mettre en œuvre le deuxième procédé de contrôle tel que défini ci-avant. Plus spécifiquement, l'invention concerne un serveur de fourniture de profil pour fournir un profil de communication à un module d'identité de souscripteur embarqué coopérant avec un terminal de communication, comprenant :
- un module d'envoi, audit module d'identité de souscripteur embarqué, d'au moins un identifiant d'un service respectif, d'un profil de communication, à mettre en œuvre lorsque ledit profil de communication est installé et à l'état actif dans le module d'identité de souscripteur embarqué ;
- le module d'envoi étant configuré pour mettre en attente l'envoi d'au moins une partie du profil de communication au module d'identité de souscripteur embarqué ;
- un module de réception configuré, après mise à jour dudit système d'exploitation par le module d'identité de souscripteur embarqué, pour recevoir une demande d'envoi ou de poursuite d'envoi du profil de communication, incluant ledit au moins un service ; et
- un module d'envoi configuré, en réponse à ladite demande d'envoi ou de poursuite d'envoi du profil de communication, pour envoyer tout ou partie du profil de communication afin de permettre l'installation dudit profil dans le module d'identité de souscripteur embarqué.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

L'invention concerne également un système comprenant un module d'identité de souscripteur embarqué tel que défini ci-avant et un serveur de fourniture de profil pour fournir un profil de communication audit module d'identité de souscripteur embarqué coopérant avec un terminal de communication, ledit serveur de fourniture de profil comprenant :
- un module d'envoi, audit module d'identité de souscripteur embarqué, d'au moins un identifiant d'un service respectif, d'un profil de communication, à mettre en œuvre lorsque ledit profil de communication est installé et à l'état actif dans le module d'identité de souscripteur embarqué ;
   le module d'envoi étant configuré pour mettre en attente l'envoi d'au moins une partie du profil de communication au module d'identité de souscripteur embarqué ; et
- un module de réception configuré, après mise à jour dudit système d'exploitation par le module d'identité de souscripteur embarqué, pour recevoir une demande d'envoi ou de poursuite d'envoi du profil de communication, incluant ledit au moins un service ; et le module d'envoi étant configuré, en réponse à ladite demande d'envoi ou de poursuite d'envoi du profil de communication, pour envoyer tout ou partie du profil de communication afin de permettre l'installation dudit profil dans le module d'identité de souscripteur embarqué.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 représente schématiquement un module eUICC coopérant avec un serveur de fourniture de profil et un serveur de mise à jour via un terminal, selon un mode de réalisation particulier de l'invention ;
- la figure 2 représente schématiquement une liste de capacités d'un module eUICC de la figue 1, selon un mode de réalisation particulier de l'invention ;
- la figure 3 représente schématiquement un module eUICC, selon un mode de réalisation particulier de l'invention ;
- la figure 4 représente schématiquement un serveur de fourniture de profil, selon un mode de réalisation particulier de l'invention ;
- la figure 5 représente schématiquement la structure d'un profil de communication à installer dans un module eUICC, selon un mode de réalisation particulier de l'invention ;
- la figure 6 représente, sous forme d'un diagramme, les étapes d'un procédé de contrôle mis en œuvre par un module eUICC et par un serveur de fourniture de profil, selon un mode de réalisation particulier de l'invention ;
- la figure 7 représente schématiquement une liste d'identifiants de service, selon un mode de réalisation particulier de l'invention ;
- la figure 8 représente, sous forme d'un diagramme, les étapes d'un procédé de contrôle mis en œuvre par un module eUICC et par un serveur de fourniture de profil, selon un mode de réalisation particulier de l'invention ;
- la figure 9 représente schématiquement une liste d'identifiants de service, selon un mode de réalisation particulier de l'invention ;
- la figure 10 représente, sous forme d'un diagramme, les étapes d'un procédé de contrôle mis en œuvre par un module eUICC et par un serveur de fourniture de profil, selon un mode de réalisation particulier de l'invention ;
- la figure 11 représente schématiquement une liste d'identifiants de service, selon un mode de réalisation particulier de l'invention ; et
- la figure 12 représente, sous forme d'un diagramme, les étapes d'un procédé de contrôle mis en œuvre par un module eUICC et par un serveur de fourniture de profil, selon un mode de réalisation particulier de l'invention.

### Description détaillée de plusieurs modes de réalisation

L'invention propose de préparer l'installation d'un profil de communication dans un module eUICC en offrant la possibilité à ce dernier de mettre à jour son système d'exploitation lorsqu'un ou plusieurs services prévus par le profil à installer ne sont pas supportés par le système d'exploitation du module eUICC concerné. L'invention vise en outre à installer le profil en question une fois que le système d'exploitation du module eUICC destinataire a été mis à jour.

L'invention porte notamment sur un procédé mis en œuvre par un module eUICC (et sur le module eUICC en question) pour permettre une telle mise à jour lorsqu'un profil doit être installé dans le module eUICC. L'invention porte également sur un procédé mis en œuvre par un serveur distant (et sur le serveur lui-même) coopérant avec le module eUICC pour préparer l'installation d'un profil dans le module eUICC.

Dans le présent exposé, on comprend par profil « actif », ou profil à l'état « actif », le fait qu'un profil de communication est activé dans un module eUICC afin d'autoriser le terminal de communication (avec lequel le module eUICC coopère) à communiquer avec le réseau de communication associé au profil en question. Conformément au standard GSMA SGP.02 v3.1 précédemment cité (dénommé par la suite standard « GSMA »), un profil (ou le domaine sécurisé ISD-P dans lequel il est contenu) est dit « actif » (ENABLE) lorsque son paramètre d'état, dénommé « life cycle », est positionné à l'état '3F'. Selon ce même standard GSMA, un profil est au contraire dit « inactif » (DISABLE) lorsque son paramètre d'état « life cycle » est positionné à l'état '1F'.

Dans le présent exposé, on entend par « service », un quelconque service (ou fonctionnalité) spécifié dans un profil de communication et susceptible d'être mis en œuvre par un module eUICC lorsque le profil est installé et à l'état actif dans le module eUICC, sous réserve que ce service soit supporté par le système d'exploitation du module eUICC concerné.

A titre d'exemple, on peut citer les services suivants susceptibles d'être mis en œuvre par un module eUICC, conformément à la norme SIMALLIANCE :
- service sans contact (permet des opérations sans contact) ;
- application USIM telle que définie par 3GPP ;
- application ISIM telle que définie par 3GPP ;
- algorithme d'authentification AKA ;
- TUAK128 : algorithme d'authentification TUAK AKA avec une longueur de clé de 128 bits ;
- UICC EAP client ;
- Javacard ;
- USIM multiple, permettant le support de plusieurs USIM en même temps ;
- Etc.

Dans le présent exposé, la notion de « système d'exploitation » est entendue au sens large et comprend un quelconque module logiciel, bloc logiciel, ou programme d'ordinateur exécutable par le module eUICC pour gérer et mettre en œuvre un ou des profils de communication.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

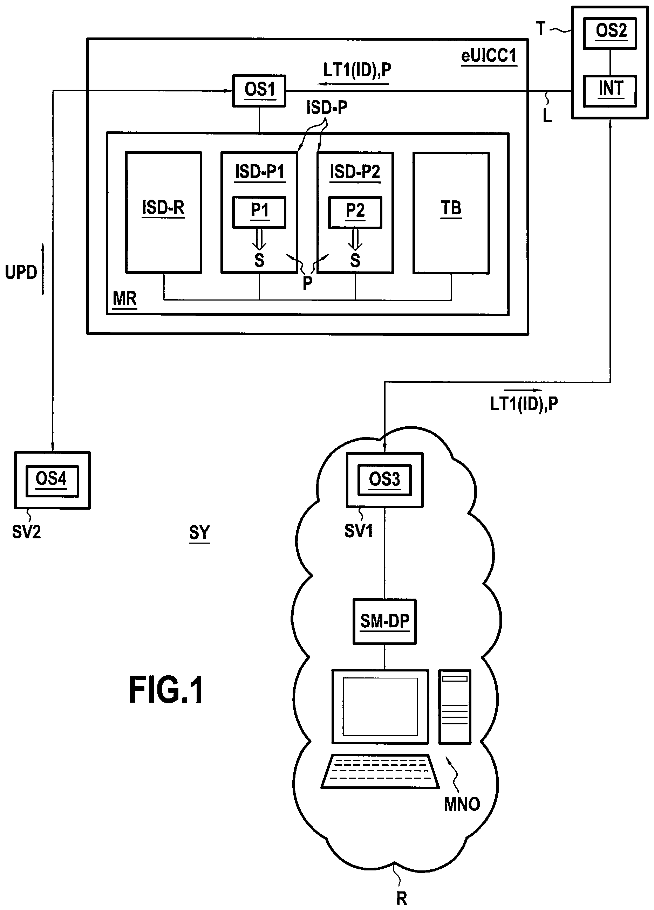

La **figure 1** représente schématiquement la structure d'un module eUICC (noté ici eUICC1) configuré pour coopérer avec un terminal de communication T pour permettre l'accès à un réseau de communication R. Le module eUICC1 est par exemple soudé ou intégré au terminal T.

Dans l'exemple considéré ici, le réseau de communication R est un réseau de téléphonie mobile et le terminal T est un terminal de communication mobile, tel qu'un téléphone mobile par exemple. D'autres exemples de réseaux de communication R et de terminaux de communication T sont toutefois possibles dans le cadre de l'invention.

Dans le mode de réalisation décrit ici, le terminal mobile T peut utiliser le module eUICC1 pour accéder de façon sécurisée au réseau R ainsi qu'aux services fournis par l'opérateur respectif de téléphonie MNO (pour « *Mobile Network Operator* »).

Dans ce mode de réalisation particulier, le terminal mobile T comporte un système d'exploitation OS2 apte à contrôler notamment une interface radio INT. L'interface radio INT du terminal T est configurée pour émettre et recevoir des communications radio avec l'extérieur via par exemple une antenne (non représentée). Cette interface radio INT comprend par exemple, de façon connue, une unité émettrice/réceptrice radio couplée à une antenne (non représentées). On peut également envisager la présence dans le terminal T d'une pluralité d'interfaces radio.

Dans le mode de réalisation décrit ici, le module eUICC1 comprend un système d'exploitation OS1 (stocké dans une mémoire non-volatile, une mémoire morte ou Flash par exemple) couplé à une mémoire non volatile réinscriptible MR.

Le système d'exploitation OS1 constitue un exemple de programme d'ordinateur au sens de l'invention, ce programme comportant des instructions pour l'exécution des étapes d'un procédé de contrôle selon un mode de réalisation particulier de l'invention. La mémoire dans laquelle se trouve le système d'exploitation OS1 constitue ainsi un exemple de support d'enregistrement au sens de l'invention, lisible par un processeur (non représenté) du module eUICC1.

Comme représenté en **figure 1****,** la mémoire non volatile MR du module eUICC1 comporte par ailleurs un domaine de sécurité privilégié ISD-R et deux domaines de sécurité secondaires ISD-P, notés ici ISD-P1 et ISD-P2. Chaque domaine de sécurité ISD-P (ou domaine sécurisé) constitue un compartiment sécurisé du module eUICC1. On comprendra que le mode de réalisation particulier envisagé ici ne constitue qu'un exemple non limitatif de mise en œuvre de l'invention, le nombre de domaines ISD-P pouvant notamment être adapté selon le cas d'usage.

Le domaine de sécurité ISD-R est privilégié en ce qu'il est notamment apte à créer, supprimer, activer ou désactiver des domaines de sécurité secondaires ISD-P dans la mémoire non volatile MR.

Chaque domaine de sécurité secondaire ISD-P est apte à contenir un unique profil de communication P (ou profil opérationnel) associé à un opérateur MNO de téléphonie particulier. Chaque profil P est ainsi contenu dans un domaine de sécurité ISD-P qui lui est dédié. De façon connue, un profil de communication P comporte des données de souscription (e.g. identifiants (IMSI etc.), clés cryptographiques, algorithmes (e.g. d'authentification)...) et peut comporter en outre un système de fichiers, des applications, et/ou des règles d'exécution prédéterminées. Dans l'exemple envisagé ici, les profils P sont conformes au standard GSMA précédemment cité.

Dans l'exemple illustré en **figure 1****,** on suppose que la mémoire MR du module eUICC1 comprend deux domaines de sécurité secondaire ISD-P1, ISD-P2, chaque domaine de sécurité secondaire étant susceptible de contenir un profil unique P1, P2 respectif pouvant chacun être à l'état actif ou inactif.

Chacun des profils P1, P2 est configuré pour autoriser, lorsqu'il est actif, le terminal T à communiquer de façon sécurisée avec un réseau mobile R d'un opérateur de communication MNO associé audit profil. Par souci de simplicité, on supposera dans cet exemple que chacun des profils P1, P2 est associé à un même réseau de communication R associé à un seul opérateur MNO, comme représenté en **figure 1****.**

Chaque profil P1, P2 spécifie en outre au moins un service S qui peut être mis en œuvre par le module eUICC1 lorsque le profil considéré est à l'état actif, sous réserve que le système d'exploitation OS1 du module eUICC1 supporte le service en question. Chaque profil comprend par exemple des données de souscription exigées par l'opérateur MNO du réseau de communication R pour obtenir l'accès aux services requis. Ces données de souscription permettent ainsi à l'opérateur de vérifier (à l'aide par exemple d'une base de données HLR) que l'utilisateur a bien souscrit au service demandé.

Le système d'exploitation OS1 du module eUICC1 est configuré pour supporter au moins un service. Des exemples de services susceptibles d'être supportés par le système d'exploitation OS1 sont définis dans la norme SIMALLIANCE (par exemple le service « sans contact », USIM, ISIM, SIM, « Milenage », « Cave », EAP, GBA, « Javacard »...), d'autres types de service étant toutefois possibles. La capacité du système d'exploitation OS1 à mettre en œuvre un service spécifié dans un profil peut varier selon le cas. Dans l'exemple représenté en **figure 1****,** la mémoire MR du module eUICC1 contient une liste TB des capacités du système d'exploitation OS1 à mettre en œuvre des services de profil. A partir de cette liste TB, le module eUICC1 est apte à déterminer s'il supporte ou non un service donné.

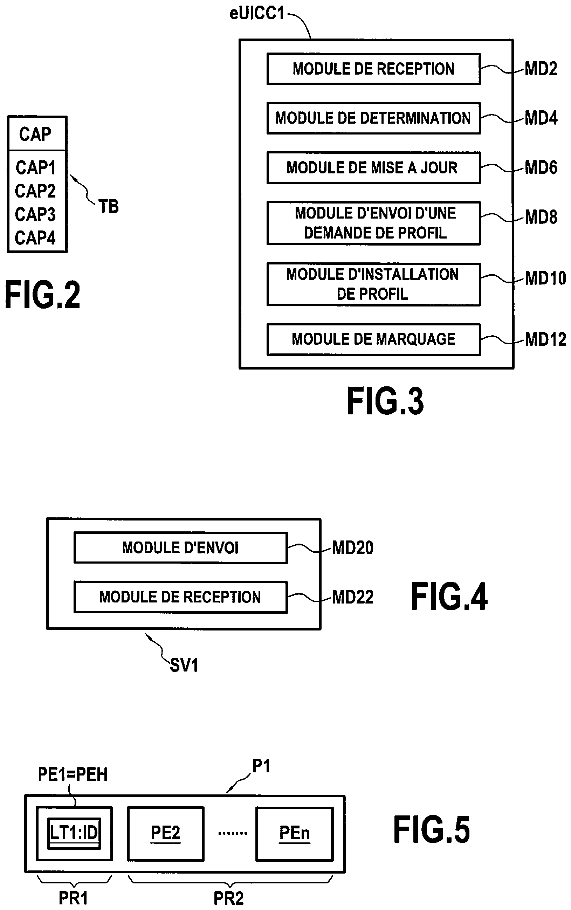

La **figure 2** représente schématiquement le contenu de la liste TB selon un exemple particulier. Dans cet exemple, la liste TB définit quatre capacités distinctes CAP1 - CAP4, notées collectivement CAP. On notera qu'une capacité CAP caractérise l'aptitude du système d'exploitation OS1 à mettre en œuvre un unique service ou plusieurs services distincts selon le cas.

Dans l'exemple représenté en **figure 1****,** le module eUICC1 est par ailleurs apte à communiquer, par l'intermédiaire du terminal T (et en particulier de son interface radio INT), de façon sécurisée avec un serveur SV1 de fourniture de profil qui, dans cet exemple, est un serveur SM-SR (pour « *Subscription Manager-Secure Routing* »). Dans cet exemple, le serveur SV1 appartient au réseau de communication R associé aux profils P1, P2.

La communication entre le module eUICC1 et le terminal T est par exemple réalisée via une liaison L conforme à la norme ISO 7816 (plus particulièrement selon ISO 7816-3 et ISO 7816-4).

Dans l'exemple considéré ici, le serveur SM-SR met en œuvre un système d'exploitation OS3 enregistré dans un support d'information (non représenté).

Le module eUICC1 est configuré pour recevoir, en provenance du serveur distant SV1, un nouveau profil P et à installer celui-ci dans un domaine de sécurité secondaire ISD-P. L'envoi d'un nouveau profil P vers le module eUICC1 est par exemple commandé par l'opérateur MNO (par exemple via le serveur SM-DP comme représenté en **figure 1****).** Une fois le nouveau profil P reçu et installé dans le module eUICC1, le domaine de sécurité privilégié ISD-R peut configurer le nouveau profil P à l'état actif ou inactif selon le cas.

Comme expliqué plus en détail par la suite, le module eUICC1 est également configuré pour recevoir, préalablement au téléchargement du profil P, une liste LT1 d'au moins un identifiant ID d'un service respectif S spécifié dans le profil P à installer. Cette liste LT1 permet au module eUICC1 de déterminer quel(s) service(s) S doit être supporté par son système d'exploitation OS1 pour mettre en œuvre le profil P une fois ce dernier installé et à l'état actif dans le module eUICC1.

Par ailleurs, le module eUICC1 est configuré pour coopérer avec un serveur distant SV2 pour récupérer, le cas échéant, une mise à jour UPD du système d'exploitation OS1 dudit module eUICC1. On suppose ici que le serveur SV2 est un serveur de mise à jour mettant en œuvre un système d'exploitation OS4 enregistré dans un support d'information (non représenté).

Le module eUICC1, le terminal T, le serveur de fourniture de profil SV1 et le serveur de mise à jour SV2 forment ensemble un système SY.

A noter que certains éléments généralement présents dans un module eUICC, dans un terminal de communication T ou encore dans un réseau de communication R d'un opérateur MNO ont été volontairement omis car ils ne sont pas nécessaires à la compréhension de la présente invention. En outre, l'homme du métier comprendra que certains éléments sont décrits ici pour faciliter la compréhension de l'invention bien qu'ils ne soient pas obligatoires ou directement impliqués pour mettre en œuvre l'invention. La structure du système SY représentée en figure 1 ne constitue qu'un exemple non limitatif de mise en œuvre de l'invention.

Comme représenté en **figure 3****,** le système d'exploitation OS1 du module eUICC1 met en œuvre, dans un exemple de réalisation particulier, un certain nombre de modules définis comme suit : un module de réception MD2, un module de détermination MD4, un module de mise à jour MD6, un module d'envoi MD8, un module d'installation de profil MD10. Selon un exemple particulier, le système d'exploitation OS1 met également en œuvre un module de marquage MD12.

Le module de réception MD2 est configuré pour recevoir au moins un identifiant ID d'un service S, d'un profil de communication P, à mettre en œuvre lorsque ledit profil P est installé et à l'état actif dans le module eUICC1. Dans l'exemple considéré en **figure 1****,** le ou les identifiants ID de service sont reçus par le module de réception MD2 sous la forme d'une liste LT1, transmise par le serveur SV1 via le terminal T. Le module de réception MD2 reçoit par exemple ledit au moins un identifiant ID dans un en-tête (ou portion d'en-tête) du profil P, comme expliqué plus en détail ultérieurement, d'autres exemples de réalisation étant toutefois possibles.

Le module de détermination MD4 est configuré pour déterminer si chaque service S, spécifié par le ou les identifiants ID reçus par le module de réception MD2, est supporté par le système d'exploitation OS1 du module eUICC1. Pour ce faire, le module eUICC1 compare par exemple les identifiants ID reçus par le module de réception MD2 avec les capacités CAP définies dans la liste TB enregistrée dans la mémoire MR, et détermine, à partir du résultat de cette comparaison, si chaque service S spécifié par le ou les identifiants ID reçus est supporté par le système d'exploitation OS1.

Le module de mise à jour MD6 est configuré, dans le cas où le module de détermination MD4 détecte qu'au moins un service S n'est pas supporté par le système d'exploitation OS1, pour envoyer, vers le serveur de mise à jour SV2, une requête de mise à jour du système d'exploitation OS1.

Le module de mise à jour MD6 est en outre configuré, si une mise à jour UPD du système d'exploitation OS1 est reçue en réponse à ladite requête de mise à jour, pour installer la mise à jour de sorte à permettre au système d'exploitation OS1 de mettre en œuvre (totalement, ou au moins partiellement) le profil de communication P.

Le module d'envoi MD8 est configuré, après achèvement de l'installation de la mise à jour UPD par le module de mise à jour MD6, pour envoyer une demande pour recevoir ou poursuivre (dans le cas particulier où une partie du profil a déjà été reçue par le module eUICC1) la réception du profil de communication P, incluant (ou spécifiant) ledit au moins un service S, à installer dans le module eUICC1. Dans l'exemple représenté en **figure 1****,** cette demande est envoyée par le module d'envoi MD8 au serveur SV1.

Le module d'installation de profil MD10 est configuré, en réponse à la demande mentionnée ci-dessus, pour recevoir ou poursuivre la réception de tout ou partie du profil de communication P de sorte à permettre l'installation dudit profil P dans le module eUICC1. Une fois récupérée la totalité du profil P, le module d'installation MD10 est configuré pour installer le profil P dans le module eUICC1.

Le module de marquage MD12 permet, le cas échéant, de marquer un profil de communication P installé dans le module eUICC afin d'indiquer que le système d'exploitation OS1 ne supporte pas au moins un service du profil de communication, chaque service non supporté étant optionnel dans le sens où il n'est pas obligatoire que le système d'exploitation OS1 le supporte pour que le profil soit mis en œuvre dans le module eUICC1. Si un tel service optionnel est marqué, le profil P correspondant n'est supporté que partiellement par le module eUICC1 mais peut toutefois être mis en œuvre dans la limite des services du profil supportés par le module eUICC1.

On comprendra que la définition ci-dessus des modules M2 à M12 ne constitue qu'un mode de réalisation non limitatif de l'invention et que des modes de réalisation, n'incluant pas au moins l'un parmi ces modules, sont possibles dans le cadre de l'invention. Au moins deux parmi ces modules peuvent former un seul et même module mis en œuvre dans le module eUICC1.

Comme représenté en **figure 4****,** le système d'exploitation OS3 du serveur SV1 de fourniture de profil met en œuvre, dans un exemple de réalisation particulier, un certain nombre de modules définis comme suit : un module d'envoi MD20, un module de réception MD22 et un module de détermination MD24.

Le module d'envoi MD20 est configuré pour envoyer, au module eUICC1, au moins un identifiant ID d'un service S, d'un profil de communication P, à mettre en œuvre par le module eUICC1 lorsque ledit profil P est installé et à l'état actif dans le module eUICC1. Le module d'envoi MD20 transmet par exemple le ou les identifiants ID au module eUICC1 dans un en-tête (ou portion d'en-tête) du profil P, comme expliqué plus en détail ultérieurement.

Le module d'envoi MD20 est en outre configuré pour mettre en attente l'envoi d'au moins une partie du profil de communication P vers le module eUICC1.

Plus spécifiquement, dans l'exemple de réalisation considéré ici, le module de réception MD22 est configuré pour recevoir, si au moins un service n'est pas supporté par le système d'exploitation OS1, une demande de mise en attente en provenance du module eUICC1 de sorte à ce que le serveur SV1 (et plus particulièrement le module d'envoi MD20) diffère l'envoi, ou la poursuite d'envoi (dans le cas où une partie du profil a déjà été envoyée au module eUICC1), du profil P au module eUICC1.

Une fois la mise à jour du système d'exploitation OS1 effectuée par le module eUICC1, le module de réception MD22 du serveur SV1 est configuré pour recevoir, en provenance du module eUICC1, une demande requérant l'envoi ou la poursuite d'envoi (dans le cas où une partie du profil a déjà été envoyée au module eUICC1) du profil P.

Le module d'envoi MD20 est en outre configuré, en réponse à la demande mentionnée ci-dessus d'envoi ou de poursuite d'envoi du profil de communication P, pour envoyer tout ou partie du profil P au module eUICC1 afin de permettre l'installation dudit profil P dans le module eUICC1. La réception de la demande d'envoi ou de poursuite d'envoi met donc ici fin à la mise en attente du module d'envoi MD20.

Dans les modes de réalisation décrits ci-après, le module eUICC1 coopère, par l'intermédiaire du terminal T, avec le serveur SV1 de fourniture de profil et avec le serveur SV2 de mise à jour. Divers mises en œuvre sont possibles pour permettre au module eUICC1 d'interagir avec l'extérieur via le terminal T dans lequel il est embarqué. Le terminal T peut par exemple jouer simplement le rôle de relai entre le module eUICC1 et l'extérieur (cas, par exemple, du protocole « Consumer » selon la norme SGP.22 [RSP Technical Spécification - Version 1.1 - 09 June 2016]). Selon un autre exemple, le terminal T peut prendre une part plus importante dans la coopération entre le module eUICC1 et l'extérieur (cas, par exemple, du protocole M2M pour « Machine to Machine » selon la norme SGP.02 [Remote Provisioning Architecture for Embedded UICC Technical Spécification - Version 3.1 - 27 May 2016]). Sauf cas particulier, la manière dont le terminal T fait l'interface entre le module eUICC1 et l'extérieur ne sera pas décrite en détail ci-après car cela n'est pas nécessaire à la compréhension de l'invention.

Par ailleurs, dans les modes de réalisation qui suivent, l'opérateur MNO commande l'installation dans le module eUICC1 d'un profil de communication P1 tel qu'illustré en **figure 5****,** selon un exemple particulier. Le profil de communication P1 peut comprendre une pluralité d'éléments de profil (PE), notés PE1 à PEn, n étant un nombre entier supérieur ou égal à 2. Dans cet exemple, le premier élément de profil PE1 constitue l'en-tête PEH du profil P1. Dans les exemples de réalisation qui suivent, l'en-tête PEH de profil constitue une première portion PR1 du profil P1 et les éléments de profil PE2 à PEn constituent, en combinaison, une deuxième portion PR2 du profil P1.

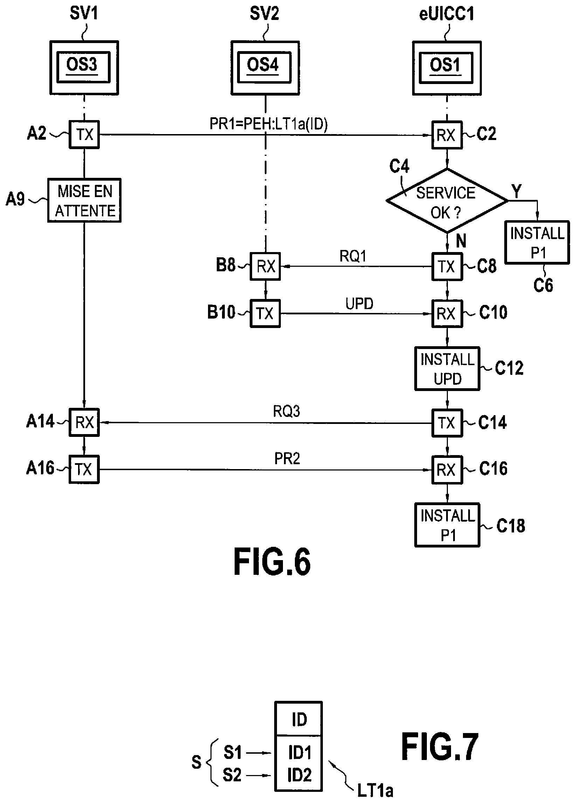

Comme illustré en **figure 5****,** l'en-tête PEH du profil P1 comprend une liste LT1 d'au moins un identifiant ID d'un service associé audit profil P1. Divers exemples de liste LT1 seront décrits plus en détail en référence aux **figures 7****,** **9** et **11****.**

Dans un exemple particulier, le profil P1 représenté en **figure 5** est, d'un point de vue structurel, conforme à la norme GSMA précitée.

Dans un exemple particulier, lors des phases de chargement et d'installation dans le module eUICC1, le profil P1 représenté en **figure 5** se présente sous la forme d'une description compacte conforme à la norme SIMALLIANCE.

Un mode de réalisation particulier de l'invention, mis en œuvre par le module eUICC1, le serveur SV1 de fourniture de profil et le serveur SV2 de mise à jour, est à présent décrit en référence aux **figures 5****,** **6** et **7****.** Pour ce faire, le module eUICC1 exécute le système d'exploitation OS1 pour mettre en œuvre un procédé de contrôle selon un mode de réalisation particulier, et le serveur SV1 de fourniture de profil exécute le système d'exploitation OS3 pour mettre en œuvre un procédé de contrôle selon un mode de réalisation particulier.

On suppose ici dans un premier temps que le profil de communication P1 n'est pas présent dans le domaine de sécurité secondaire ISD-P1 du module eUICC1, et que l'opérateur MNO associé au profil P1 tente de faire installer le profil P1 dans le module eUCC1 afin de permettre l'accès, sur le terminal T, à au moins un service S associé au profil P1.

Comme représenté en **figure 5****,** l'en-tête PEH de profil comprend une liste LT1 d'au moins un identifiant ID d'un service S respectif associé au profil P1. Comme illustré en **figure 7****,** on suppose ici que la liste LT1, notée LT1a dans cet exemple de réalisation, comprend deux identifiants ID1, ID2 (notés collectivement ID) correspondant respectivement aux services S1, S2 (notés collectivement S). On comprendra que le nombre et la nature du ou des services associés au profil P1 peuvent varier selon le cas.

Comme représenté en **figure 6****,** le serveur SV1 de fourniture de profil envoie (A2), au module eUICC1, la liste LT1a des identifiants ID1 et ID2 des services respectifs S1 et S2, du profil de communication P1, à mettre en œuvre lorsque ledit profil P1 est installé et à l'état actif dans le module eUICC1.

Le module eUICC1 reçoit (C2) ensuite la liste LT1a identifiant les services S1, S2 du profil P1 à mettre en œuvre par le module eUICC1 lorsque ledit profil P1 est installé et à l'état actif dans le module eUICC1.

Dans l'exemple considéré ici, lors de l'étape d'envoi A2, le serveur SV1 envoie au module eUICC1 une première portion PR1 du profil P1, cette portion comportant la liste LT1a des identifiants ID1 et ID2. Comme illustré en **figure 5****,** on suppose dans cet exemple de réalisation que la première portion PR1 constitue l'en-tête PEH du profil P1, bien que d'autres mises en œuvre soient possible. Le module eUICC1 reçoit ainsi en C2 la première portion PR1 (l'en-tête PEH dans cet exemple) du profil P1 comprenant la liste LT1a.

Une fois la première portion PR1 envoyée (A2) au module eUICC1, le serveur SV1 se met en attente (A9) jusqu'à l'étape A14 décrite ultérieurement. Dans un exemple particulier, après l'envoi A2 des identifiants ID, le serveur SV1 se met en attente (A9) sur réception d'une demande de mise en attente (ou de suspension) émise par le module eUICC1. Comme indiqué par la suite, cette mise en attente A9 signifie que le serveur SV1 (ici son module d'envoi MD20) diffère l'envoi au module eUICC1 d'au moins une partie du profil P1, à savoir de la deuxième portion PR2 dans le cas présent.

Par ailleurs, suite à la réception C2 de la première portion PR1, le module eUICC1 détermine (C4) si chaque service S spécifié dans la liste LT1a reçue (à savoir les services S1 et S2 dans cet exemple) est supporté par le système d'exploitation OS1 du module eUICC1.

Dans le cas où chaque service S (à savoir S1 et S2 dans cet exemple) est supporté par le système d'exploitation OS1, le procédé prend fin. Dans ce cas, le module eUICC1 installe (C6) par exemple le profil de communication P1 dans le domaine de sécurité secondaire ISD-P1, après avoir reçu l'intégralité des portions manquantes constituant le profil.

Si, en revanche, le module eUICC1 détermine en C4 qu'au moins un service S identifié dans la liste LT1a reçue en C2 n'est pas supporté par le système d'exploitation OS1, le module eUICC1 procède à l'étape C8.

En C8, le module eUICC1 envoie, au serveur SV2 de mise à jour, une requête RQ1 de mise à jour du système d'exploitation OS1. Le serveur SV2 reçoit la requête RQ1 de mise à jour en B8. Dans un exemple particulier, la requête RQ1 de mise à jour est envoyée par le module eUICC1 à une adresse réseau prédéfinie, cette adresse étant par exemple préenregistrée en mémoire dans le module eUICC1.

En réponse à la requête RQ1, le serveur SV2 détermine si une mise à jour UPD du système d'exploitation OS1 est disponible et, dans l'affirmative, envoie (B10) la mise à jour UPD au module eUICC1.

Si une telle mise à jour UPD du système d'exploitation OS1 est disponible, le module eUICC1 la reçoit en C10, puis procède à son installation (C12) de sorte à permettre au système d'exploitation OS1 de mettre en œuvre au moins partiellement le profil de communication P1. Dans un exemple particulier, l'installation C12 de la mise à jour UPD dans le module eUICC1 permet à son système d'exploitation OS1 de supporter au moins un service S spécifié dans la liste LT1a que ledit système d'exploitation OS1 ne supportait pas (C4) avant ladite mise à jour C12. Dans un exemple particulier, l'installation C12 de la mise à jour UPD permet à présent au système d'exploitation OS1 de supporter chaque service S spécifié dans la liste LT1a reçue en C2.

Après achèvement de l'installation C12 de la mise à jour UPD, le module eUICC1 envoie (C14), au serveur SV1 de fourniture de profil, une demande RQ3 pour poursuivre (c.-à-d. reprendre) la réception du profil de communication P1 à installer dans ledit module eUICC1. Comme indiqué précédemment, le module eUICC1 a déjà reçu en C2 la première portion PR1 (à savoir, l'en-tête PEH dans cet exemple) du profil P1, cette portion comportant la liste LT1a. Le système d'exploitation OS1 étant à présent mis à jour, le module eUICC1 demande (C14) au serveur SV1 la poursuite de la réception du profil P1 afin de recevoir la partie manquante du profil P1, à savoir la deuxième portion PR2 comme illustré en **figure 5****.**Le serveur SV1 reçoit en A14 la requête RQ3 de poursuite de réception du profil P1 et, en réponse à cette requête RQ3, met fin à sa phase d'attente A9 et envoie (A16) au module eUICC1 tout ou partie du profil P1 de sorte à permettre l'installation du profil P1 dans le module eUICC1. Dans l'exemple considéré ici, le module eUICC1 a déjà reçu en C2 une première portion PR1 (l'en-tête PEH dans cet exemple) du profil P1. Selon cet exemple, le serveur SV1 de fourniture de profil envoie en A16 la deuxième portion PR2 (illustrée en **figure 5**) du profil P1 complémentaire de la première portion PR1 reçue en C2, de sorte à permettre au module eUICC1 d'obtenir la totalité du profil P1 à installer. Dans un exemple particulier, ces première et deuxième portions PR1, PR2 forment ensemble le profil P1 dans sa totalité (dans ce cas, la portion PR2 comprend les éléments de profil PE2 à PEn du profil P1 comme illustré en **figure 5**).

A partir des portions de profil PR1 et PR2 reçues respectivement en C2 et C16, le module eUICC1 récupère ainsi l'ensemble du profil P1. Le module eUICC1 peut effectuer tout traitement approprié sur les données contenues dans les portions PR1 et PR2 pour obtenir le profil P1 à installer.

Lors d'une étape d'installation C18, le module eUICC1 installe ensuite le profil P1. Dans cet exemple, le profil P1 est installé dans le domaine de sécurité secondaire ISD-P1 du module eUICC1.

Une fois le profil de communication P1 installé (C18), le module eUICC1 (et plus particulièrement son domaine de sécurité privilégié IDS-R) est capable de commuter le profil P1 entre un état actif et un état inactif. Lorsqu'il est configuré à l'état actif, le profil P1 autorise le terminal de communication T à communiquer avec le réseau de communication R associé audit profil P1 afin, par exemple, d'accéder aux services S1, S2 spécifiés dans le profil P1. Comme déjà indiqué, le profil P1 comprend par exemple des données de souscription permettant d'identifier et/ou d'authentifier l'utilisateur, ayant souscrit aux services S1, S2, auprès de l'opérateur MNO du réseau R.

On comprendra que d'autres variantes de réalisation sont possibles, dans lesquelles notamment le ou les identifiants ID reçus par le module eUICC1 en C2 ne sont pas inclus dans une première portion PR1 du profil P1 (les identifiants ID sont par exemple envoyés dans un message quelconque indépendant du profil P1). Dans ce cas, après achèvement de l'installation C12 de la mise à jour UPD, le module eUICC1 envoie en C14, au serveur SV1 de fourniture de profil, une demande RQ3 pour recevoir le (et non pour poursuivre la réception du) profil de communication P1 à installer dans le module eUICC1.

Lorsqu'un module eUICC détecte que son système d'exploitation ne supporte pas au moins un service spécifié dans un profil à installer, l'invention permet avantageusement audit module eUICC d'obtenir la mise à jour nécessaire de sorte à pallier, au moins en partie, son incapacité à mettre en œuvre ledit au moins un service non supporté. Une fois la mise à jour réalisée, le module eUICC peut installer le profil de sorte à offrir, lorsque le profil en question est à l'état actif, l'accès à l'un ou plusieurs services associés audit profil.

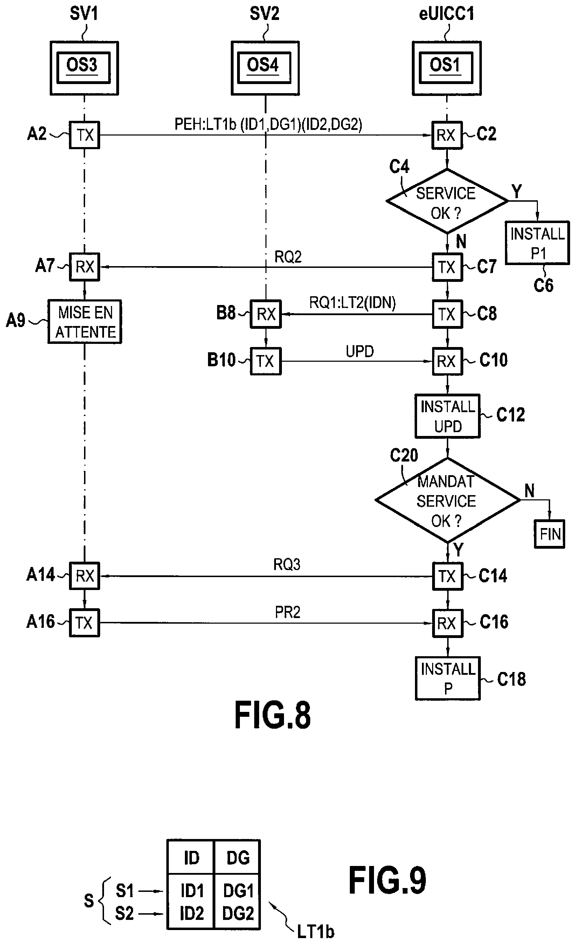

Un mode de réalisation particulier de l'invention, mis en œuvre par le module eUICC1, le serveur SV1 de fourniture de profil et le serveur SV2 de mise à jour représentés en **figure 1****,** est à présent décrit en référence aux **figures 8** et **9****.** Pour ce faire, le module eUICC1 exécute le système d'exploitation OS1 pour mettre en œuvre un procédé de contrôle selon un mode de réalisation particulier, et le serveur SV1 de fourniture de profil exécute le système d'exploitation OS3 pour mettre en œuvre un procédé de contrôle selon un mode de réalisation particulier.

On suppose à nouveau que le profil de communication P1 n'est pas présent dans le domaine de sécurité secondaire ISD-P1 du module eUICC1, et que l'opérateur MNO associé au profil P1 tente de faire installer le profil P1 dans le module eUCC1 afin de permettre l'accès, sur le terminal T, à au moins un service associé au profil P1.

Dans cet exemple, le profil de communication P1 à installer dans le module eUICC1 est illustré en **figure 5****,** comme déjà décrit précédemment. L'en-tête PEH du profil P1 comprend dans cet exemple une liste LT1, notée cette fois LT1b, telle que représentée en **figure 9****.** De même que pour la liste LT1a précédemment décrite, la liste LT1b contenue à présent dans l'entête PEH du profil P1 comprend les identifiants ID1, ID2 (notés collectivement ID) des services S1, S2 (notés collectivement S). La liste LT1b contenue ici dans l'en-tête PEH comprend en outre, en association avec chaque identifiant ID1, ID2 de service, un degré d'importance respectif DG1, DG2 (notés collectivement DG) du service, ce degré d'importance DG indiquant si le service S correspondant doit obligatoirement être supporté par le système d'exploitation OS1 lorsque le profil de communication P1 est installé dans le module eUICC1.

Chaque degré d'importance DG peut par exemple prendre l'un parmi deux état distinct, à savoir : un premier état indiquant que le service S associé doit obligatoirement être supporté par le système d'exploitation OS1 lorsque le profil de communication P1 est installé dans le module eUICC1, et un deuxième état indiquant que le service S associé ne doit pas obligatoirement être supporté par le système d'exploitation OS1 lorsque le profil de communication P1 est installé dans le module eUICC1.

Comme représenté en **figure 8****,** le serveur SV1 de fourniture de profil envoie (A2), au module eUICC1, l'en-tête PEH du profil P1, de la même manière qu'à l'étape d'envoi A2 représentée en **figure 6****.** Comme indiqué ci-dessus, la liste LT1b présente dans l'en-tête PEH du profil P1 comporte les identifiants ID1, ID2 de service ainsi que les degrés d'importance DG1, DG2 associés. Le nombre et la nature des services spécifiés dans la liste LT1b peuvent varier selon le cas.

On suppose, dans cet exemple, que les services S1, S2 sont des services obligatoires dans le sens où les degrés d'importance DG1, DG2 associés indiquent que ces services S1, S2 doivent obligatoirement être supportés par le système d'exploitation OS1 lorsque le profil de communication P1 est installé dans le module eUICC1.

Le module eUICC1 reçoit l'en-tête PEH en C2, puis détermine (C4), comme déjà décrit en référence à la **figure 6****,** si chaque service S spécifié dans la liste LT1b reçue (à savoir les services S1 et S2 dans cet exemple) est supporté par le système d'exploitation OS1 du module eUICC1.

Pour ce faire, le module eUICC1 compare ici, au cours de l'étape de détermination C4, la ou les capacités CAP du système d'exploitation OS1 avec chaque service S spécifié dans la liste LT1 reçue en C2. A cette fin, le module eUICC1 consulte sa liste TB représentée en **figure 2** et compare ses capacités CAP1 - CAP4 avec les services S1, S2 correspondant respectivement aux identifiants ID1, ID2 contenus dans la liste LT1b.

Dans le cas où les services S1 et S2 sont supportés par le système d'exploitation OS1, le procédé prend fin. Dans ce cas, le module eUICC1 installe (C6) par exemple le profil de communication P1 dans le domaine de sécurité secondaire ISD-P1.

Si, en revanche, le module eUICC1 détermine en C4 qu'au moins l'un parmi les services S1, S2 identifiés dans la liste LT1b n'est pas supporté par le système d'exploitation OS1, le procédé se poursuit à l'étape C7.

On suppose dans cet exemple que le module eUICC1 détecte en C4 que le service S1 est supporté par OS1 mais que le service S2 n'est pas supporté par OS1.

Comme représenté en **figure 8****,** le module eUICC1 envoi en C7 une requête RQ2 de mise en attente (ou requête de suspension) au serveur SV1 de fourniture de profil afin de différer la poursuite de réception du profil P1. Le serveur SV1 réceptionne RQ2 en A7. Comme déjà indiqué précédemment, le module eUICC1 a déjà reçu en C2 une première portion PR1 du profil P1 à installer, à savoir l'en-tête PEH contenant la liste LT1b dans cet exemple. L'envoi de la requête RQ2 de mise en attente permet de différer l'envoi, par le serveur SV1, de la partie manquante PR2 du profil P1 comprenant les éléments de profil PE2 à PEn. En réponse à cette requête RQ2, le serveur SV1 se met en attente (A9), de façon à donner le temps nécessaire au module eUICC1 pour mettre à jour (si possible) son système d'exploitation OS1.

En C8, le module eUICC1 envoie, au serveur SV2 de mise à jour, une requête RQ1 de mise à jour de son système d'exploitation OS1, comme déjà décrit en référence à la **figure 6****.** Le serveur SV2 reçoit la requête RQ1 de mise à jour en B8. Dans cet exemple, la requête RQ1 comprend une liste LT2 comportant l'identifiant IDN du ou des services S identifiés en C4 comme n'étant pas supportés par le système d'exploitation OS1. Le service S2 n'étant pas supporté par OS1 dans cet exemple, la liste LT2 contient donc l'identifiant ID2 en tant qu'identifiant IDN de service non supporté.

Dans un exemple particulier, le module eUICC1 envoie en C8, au serveur SV2 de mise à jour, la liste LT1. Autrement dit, la liste LT2 envoyée en C8 est alors identique à la liste LT1 reçue en C2. La liste LT1 permet au serveur SV2 de mise à jour de déterminer si une mise à jour utile est disponible pour le module eUICC1.

Comme déjà décrit en référence à la **figure 6****,** en réponse à la requête RQ1, le serveur SV2 détermine si une mise à jour UPD du système d'exploitation OS1 est disponible et, dans l'affirmative, envoie (B10) la mise à jour UPD au module eUICC1.

Si une telle mise à jour UPD du système d'exploitation OS1 est disponible, le module eUICC1 procède aux étapes C10 et C12 comme déjà décrites en référence à la **figure 6****.** Plus particulièrement, le module eUICC1 reçoit (C10) la mise à jour UPD puis procède à son installation (C12) de sorte à permette au système d'exploitation OS1 de mettre en œuvre au moins partiellement le profil de communication P1.

Une fois la mise à jour C12 réalisée, le module eUICC1 détermine (C20) si le système d'exploitation OS1 supporte au moins chaque service S du profil de communication P1 indiqué par le degré d'importance DG associé comme devant être obligatoirement supporté par le système d'exploitation OS1. Autrement dit, le module eUICC1 vérifie en C20 si le système d'exploitation OS1, une fois mis à jour en C12, est dans la capacité de mettre en œuvre chaque service obligatoire S spécifié en tant que tel dans la liste LT1b. Dans l'affirmative, le procédé se poursuit en C14. Dans le cas contraire, le procédé prend fin (le module eUICC1 notifie par exemple au serveur SV1 de fourniture de profil qu'il abandonne le processus d'installation du profil P1).

On suppose ici que les services S1 et S2 sont obligatoires et que, grâce à sa mise à jour UPD, le système d'exploitation OS1 supporte à présent les services S1, S2. Dans ce cas, le module eUICC1 réalise les étapes C14, C16 et C18 et le serveur SV1 réalise les étapes A14, A16, comme déjà décrites en référence à la **figure 6****.**

Ainsi, le module eUICC1 envoie en C14, au serveur SV1 de fourniture de profil, une demande RQ3 pour poursuivre (ou reprendre) la réception du profil P1 à installer dans le module eUICC1. Comme indiqué précédemment, le module eUICC1 a déjà reçu en C2 la première portion PR1 (à savoir, l'en-tête PEH dans cet exemple) du profil P1, cette portion comportant la liste LT1b. Le système d'exploitation OS1 étant à présent mis à jour et apte à mettre en œuvre les services S1 et S2, le module eUICC1 demande (C14) au serveur SV1 la poursuite de la réception du profil P1 afin de recevoir la partie manquante PR2 du profil P1. Le serveur SV1 reçoit en A14 la requête RQ3 de poursuite de réception du profil P1 et, en réponse à cette requête RQ3, envoie (A16) au module eUICC1 tout ou partie du profil P1 (c.-à-d. la deuxième portion PR2 dans cet exemple) de sorte à permettre l'installation du profil P1 dans le module eUICC1.

A partir des portions de profil PR1 et PR2 reçues respectivement en C2 et C16, le module eUICC1 récupère ainsi l'ensemble du profil P1 et installe ce dernier dans le domaine de sécurité secondaire ISD-P1 au cours d'une étape d'installation C18, comme déjà décrit en référence à la **figure 6****.**

Une fois le profil de communication P1 installé (C18), le module eUICC1 (et plus particulièrement son domaine de sécurité privilégié IDS-R) est capable de commuter le profil P1 entre un état actif et un état inactif, comme également décrit en référence à la **figure 6****.**

On comprendra ici aussi que d'autres variantes de réalisation sont possibles, dans lesquelles notamment le module eUICC1 ne reçoit pas en C2 le ou les identifiants ID de service S dans une première portion PR1 du profil P1 mais sous tout autre forme appropriée (dans un message quelconque indépendant du profil P1 par exemple). Dans ce cas, le module eUICC1 envoie en C14, au serveur SV1 de fourniture de profil, une demande RQ3 pour recevoir le (et non pour poursuivre la réception du) profil de communication P1 à installer dans le module eUICC1.

L'invention permet de mettre à jour, si nécessaire, le système d'exploitation d'un module eUICC préalablement à l'installation d'un profil de communication afin de s'assurer que le profil puisse être utilisé dans les meilleures conditions par le module eUICC. L'invention permet en particulier de s'assurer que le module eUICC est capable de mettre en œuvre chaque service obligatoire spécifié dans le profil considéré avant de procéder à l'installation du profil dans le module eUICC en question.

L'invention permet en outre d'offrir le temps suffisant au module eUICC pour procéder à la mise à jour de son système d'exploitation, lorsqu'une telle mise à jour est nécessaire, avant de recevoir la ou les parties manquantes du profil à installer. De façon avantageuse, le module eUICC peut éventuellement abandonner le téléchargement du profil en question s'il détecte qu'aucune mise à jour ne lui permet de supporter chaque service obligatoire associé audit profil, économisant ainsi des ressources au niveau du réseau, du module eUICC1 et du serveur SV1 de fourniture de profil.

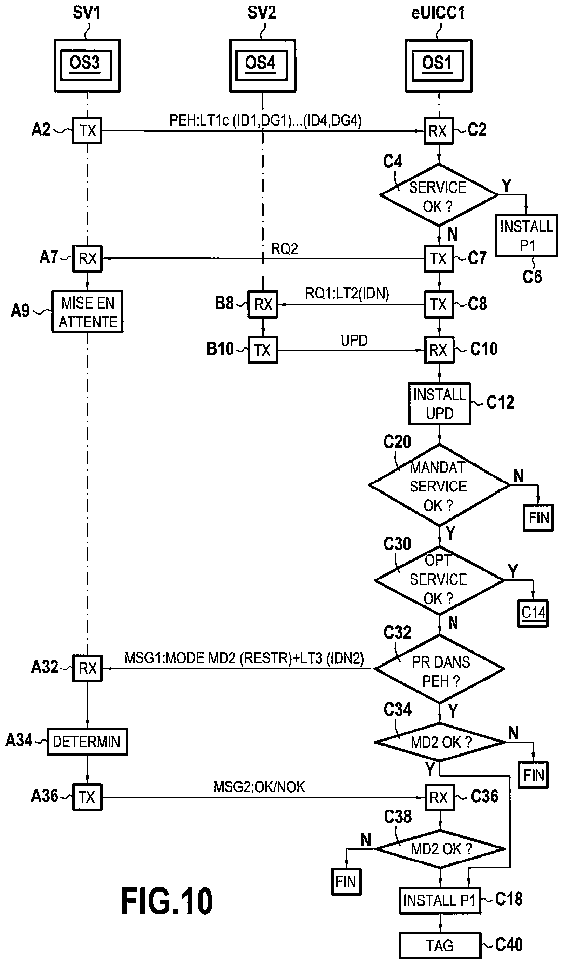

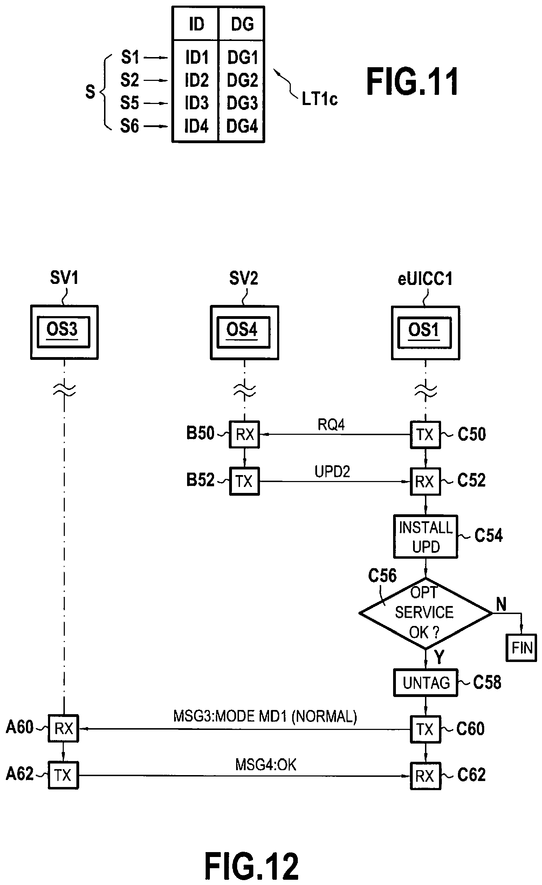

Un mode de réalisation particulier de l'invention, mis en œuvre par le module eUICC1, le serveur SV1 de fourniture de profil et le serveur SV2 de mise à jour, est à présent décrit en référence aux **figures 10** et **11****.** Pour ce faire, le module eUICC1 exécute le système d'exploitation OS1 pour mettre en œuvre un procédé de contrôle selon un mode de réalisation particulier, et le serveur SV1 de fourniture de profil exécute le système d'exploitation OS3 pour mettre en œuvre un procédé de contrôle selon un mode de réalisation particulier.

On suppose à nouveau que le profil de communication P1 n'est pas présent dans le domaine de sécurité secondaire ISD-P1 du module eUICC1, et que l'opérateur MNO associé au profil P1 tente de faire installer le profil P1 dans le module eUCC1 afin de permettre l'accès, sur le terminal T, à au moins un service associé au profil P1.

Dans cet exemple, le profil de communication P1 à installer dans le module eUICC1 est illustré en **figure 5****,** comme déjà décrit précédemment. L'en-tête PEH du profil P1 comprend dans cet exemple une liste LT1, notée cette fois LT1c, telle que représentée en **figure 11****.** On suppose à présent que la liste LT1c contenue dans l'en-tête PEH du profil P1 comprend les identifiants ID1 à ID4 (notés collectivement ID) des services respectifs S1 à S4 (notés collectivement S). La liste LT1c comprend en outre, en association avec chaque identifiant ID1 à ID4, un degré d'importance respectif DG1 à DG4 (notés collectivement DG) comme déjà décrit en référence à la **figure 9****,** ce degré d'importance DG indiquant si le service S correspondant doit obligatoirement être supporté par le système d'exploitation OS1 lorsque le profil de communication P1 est installé dans le module eUICC1.

On suppose dans cet exemple que les services S1, S2 sont indiqués en tant que services obligatoires par leur degré d'importance DG1, DG2 associé, et que les services S3, S4 sont indiqués en tant que services optionnels par leur degré d'importance respectif DG3, DG4.

Dans cet exemple de réalisation illustré en **figure 10****,** le serveur SV1 réalise les étapes A2 à A9 et le module eUICC1 réalise les étapes C2 à C12 et C20, comme précédemment décrit en référence à la **figure 8****.** On suppose par exemple ici que les services obligatoires S1, S2 ne sont pas initialement supportés (en C4) par le système d'exploitation OS1 causant de ce fait une mise à jour C12 du système d'exploitation OS1 comme déjà décrit en référence à la **figure 8****.**

Au cours de l'étape de détermination C20, le module eUICC1 détermine si son système d'exploitation OS1, à présent mis à jour, supporte au moins chaque service S obligatoire du profil P1, c'est-à-dire chaque service (S1 et S2 dans cet exemple) indiqué par le degré d'importance DG associé comme devant être obligatoirement supporté par le système d'exploitation OS1. Dans l'affirmative, le procédé se poursuit en C30. Dans le cas contraire, le procédé prend fin (le module eUICC1 notifie par exemple au serveur SV1 de fourniture de profil qu'il abandonne le processus d'installation du profil P1).

Au cours d'une étape de détermination C30, le module eUICC1 détermine si son système d'exploitation OS1, à présent mis à jour, supporte également chaque service S optionnel du profil P1, c'est-à-dire chaque service (S3 et S4 dans cet exemple) indiqué par le degré d'importance DG associé comme ne devant pas être obligatoirement supporté par le système d'exploitation OS1. Dans l'affirmative, le procédé reprend en C14 comme déjà décrit en référence à la **figure 8****.** Dans le cas contraire, le procédé se poursuit en C32.

On notera que les étapes C20 et C30 peuvent être réalisées l'une après l'autre, ou simultanément par le module eUICC1.

On suppose dans cet exemple que le module eUICC1 détermine en C30 que le service optionnel S3 est supporté par le système d'exploitation OS1 mais que le service optionnel S4 n'est pas supporté par le système d'exploitation OS1.

A ce stade, diverses mises en œuvre de l'invention sont possibles. Dans l'exemple considéré ici, le module eUICC1 détermine en C32 si un paramètre PR a été reçu dans l'en-tête PEH lors de l'étape de réception C2, ce paramètre indiquant si le module eUICC1 est autorisé à (ou doit) mettre en œuvre de façon restreinte le ou les services S du profil P1. On entend ici par utilisation (ou mise en œuvre) restreinte, le fait que, lorsque le profil est à l'état actif, le module eUICC1 ne met en œuvre que partiellement ledit profil dans le sens où au moins un service optionnel dudit profil n'est pas supporté par le module eUICC. Dans le cas d'une utilisation restreinte d'un profil (ou plus précisément des services du profil), le module eUICC1 fonctionne en mode MD2 dit « d'utilisation restreinte ».

Dans le mode de réalisation considéré ici, le serveur SV1 envoie par exemple en A2 la première portion PR1 (ici l'en-tête PEH) qui comporte le paramètre PR. Pour ce faire, un serveur SM-DP (comme représenté en **figure 1****)** insert par exemple ce paramètre PR au préalable dans la première portion PR1 du profil P1 lors d'une phase de préparation ou de personnalisation (création du profil ...). Le paramètre PR est par exemple inséré par le serveur SM-DP dans des règles d'exécution (ou « policy rules » en anglais) présentes dans le profil P1. Ces règles sont par exemple conformes à la norme. Le serveur SM-DP transmet ensuite la totalité ou partie du profile P1 au serveur SV1, pour envoi (A2) au module eUICC1 de la première portion PR1 avec le paramètre PR.

Selon la manière dont il est configuré, le serveur SV1 (coopérant avec le serveur SM-DP comme indiqué ci-avant) peut indiquer à l'aide de ce paramètre PR que le module eUICC1 est autorisé à, ou doit, se configurer en mode d'utilisation restreinte lorsqu'au moins un service optionnel n'est pas supporté.

Si le module eUICC1 détermine en C32 que le paramètre PR a bien été reçu dans l'en-tête PEH lors de l'étape de réception C2, le procédé se poursuit en C34. Dans le cas contraire, le module eUICC1 envoie un message MSG1 demandant au serveur SV1 s'il est autorisé à (ou s'il doit) fonctionner en mode MD2 d'utilisation restreinte. Dans un exemple particulier, le message MSG1 comprend en outre une liste LT3 comportant l'identifiant IDN2 du ou des services S optionnels du profil P1 que le système d'exploitation OS1 ne supporte pas. Selon un exemple particulier, le message MSG1 comprend un identifiant du profil P1 à installer et à mettre en œuvre dans le module eUICC1.

En réponse au message MSG1 reçu en A32, le serveur SV1 de fourniture de profil détermine (A34) si le module eUICC1 est autorisé à (ou doit) mettre en œuvre le profil P1 selon le mode MD2 d'utilisation restreinte. Cette détermination A34 peut, le cas échéant, être réalisée en fonction de la liste LT3 et/ou de l'identifiant du profil P1 si ces éléments sont présents dans le message MSG1. L'opérateur du serveur SV1 peut ainsi indiquer à distance à chaque module eUICC si le mode MD2 d'utilisation restreinte peut (ou doit) être appliqué.

S'il détermine en A34 que le mode MD2 d'utilisation restreinte est autorisé (ou requis), le serveur SV1 envoie (A36) en réponse un deuxième message MSG2 indiquant que le module eUICC1 est autorisé à (ou doit) mettre en œuvre de façon restreinte (mode MD2) les services S du profil P1.

Le module eUICC1 reçoit le message MSG2 en C36 et détermine (C38), à partir du message MSG2 du serveur SV1, s'il doit mettre en œuvre le profil P1 en mode MD2 d'utilisation restreinte. Dans la négative, le procédé prend fin. Dans le cas contraire (mode MD2 autorisé/requis), le procédé se poursuit à l'étape C18 au cours de laquelle le module eUICC1 installe le profil P1 comme précédemment décrit. Pour ce faire, le module eUICC1 réalise par exemple les étapes C14 et C16 (non représentées en **figure 10****)** comme déjà décrites en référence aux **figures 6** et **8** afin de recevoir la partie manquante PR2 du profil P1. Alternativement, le module eUICC1 reçoit la partie PR2 du profil P1 en réponse au message MSG1, sans que l'envoi d'une demande spécifique soit nécessaire par le module eUICC1.

Si, par ailleurs, le module eUICC1 détermine en C32 que le paramètre PR a bien été reçu dans l'en-tête PEH lors de l'étape de réception C2, le procédé se poursuit en C34. Au cours de l'étape de détermination C34, le module eUICC1 détermine, à partir du paramètre PR précédemment reçu, s'il doit mettre en œuvre le profil P1 en mode MD2 d'utilisation restreinte. Dans la négative, le procédé prend fin. Dans le cas contraire (mode MD2 autorisé/requis), le procédé se poursuit à l'étape C18 comme déjà ci-dessus.

Dans un exemple particulier, le module eUICC1 détermine en C34 qu'il doit mettre en oeuvre le profil P1 en mode MD2 d'utilisation restreinte seulement si le paramètre PR reçu en C2 est dans un état prédéfini. Le paramètre PR peut par exemple être défini par un bit codé dans l'en-tête PEH reçu en C2, ce bit déclenchant ou non le passage du module eUICC1 en mode MD2 d'utilisation restreinte selon la valeur qui lui a été attribuée.

Une fois l'étape d'installation C18 réalisée, le module eUICC1 est configuré, lorsque ce profil P1 est à l'état actif, pour mettre en œuvre partiellement (en mode MD2 d'utilisation restreinte) les services S du profil P1 (dans cet exemple, seuls les services S1, S2 et S3 sont mis en œuvre).

Le module eUICC1 envoie éventuellement au serveur SV1 une notification indiquant que ledit module eUICC1 est configuré pour mettre en œuvre les services S du profil P1 de façon restreinte (mode MD2).

L'invention permet ainsi à un module eUICC de mettre en œuvre partiellement un profil de communication lorsqu'au moins un service optionnel du profil n'est pas supporté par le système d'exploitation du module eUICC, dans la mesure où une telle mise en œuvre partielle est autorisée ou requise par l'opérateur MNO associé.

Dans un mode de réalisation particulier, suite à l'installation C18 du profil P1, le module eUICC1 réalise (C40) un marquage du profil de communication P1 de sorte à indiquer qu'au moins un service optionnel S du profil P1 (à savoir le service S4 dans cet exemple) n'est pas supporté par le système d'exploitation OS1. Ce marquage permet d'indiquer à un tiers que le module eUICC1, et donc le terminal T, met en œuvre le profil P1 en mode MD2 d'utilisation restreinte. Le terminal T est par exemple configuré, à partir de ce marquage, pour fournir une notification à un utilisateur pour lui indiquer que le profil P1 est utilisé de façon restreinte (mode MD2).

Dans un exemple particulier, lors de l'étape de marquage C40, le module eUICC1 modifie (ou attribue une valeur à), dans le profil de communication P1 installé dans ledit module eUICC1, un paramètre pour indiquer qu'il est configuré pour mettre en œuvre de façon restreinte les services S du profil P1. Dans un exemple particulier, cette modification est réalisée dans un registre, associé au profil P1. Ce registre est par exemple contenu dans le domaine de sécurité secondaire ISD-P1, ou dans le domaine de sécurité privilégié ISD-R du module eUICC1, ou plus généralement dans une mémoire du module eUICC1.

Dans une variante de l'exemple décrit ci-dessus en référence à la **figure 10****,** en réponse à la requête RQ1 de mise à jour du système d'exploitation OS1, le module eUICC1 reçoit une notification du serveur SV2 de mise à jour indiquant le ou les services non supportés par le système d'exploitation OS1 qui deviendraient supportés si la mise à jour disponible UPD est installée dans le module eUICC1. Le module eUICC1 peut ainsi déterminer, à partir de cette notification, si le fonctionnement en mode MD2 d'utilisation restreinte est requis avant même de réaliser la mise à jour du système d'exploitation. Dans un exemple particulier, si le fonctionnement en mode MD2 est requis, le module eUICC1 détermine, préalablement à la mise à jour du système d'exploitation OS1, si le serveur SV1 autorise (ou demande) le fonctionnement en mode MD2 d'utilisation restreinte, comme par exemple précédemment décrit en référence aux étapes C32-C38. De cette manière, il est notamment possible d'éviter une mise à jour du système d'exploitation du module eUICC si une telle mise à jour ne permet pas au module eUICC de mettre en œuvre par la suite le profil de communication à installer, ce qui permet d'économiser des ressources dans le réseau.

A noter par ailleurs que dans l'hypothèse où le module eUICC1 met en œuvre le profil P1 selon le mode MD2 d'utilisation restreinte, une mise à jour ultérieure du système d'exploitation OS1 peut être réalisée par le module eUICC1 afin de réduire le nombre de services optionnels non supportés ou, le cas échéant, pour que chaque service optionnel du profil P1 soit supporté par le module eUICC1. Dans ce dernier cas, le module eUICC1 peut fonctionner en mode MD1 d'utilisation non-restreinte (normal) de sorte à ce que chaque service obligatoire et optionnel du profil P1 soit mis en œuvre lorsque ce dernier est à l'état actif dans le module eUICC1.

On considère à présent un mode de réalisation particulier selon lequel le procédé décrit en référence à la **figure 10** se poursuit en **figure 12****.** On suppose ici que le module eUICC1 met en œuvre de façon restreinte le profil P1 puisque son système d'exploitation OS1 ne supporte pas le service optionnel S4 du profil P1.

Plus particulièrement, après un intervalle de temps déterminé, le module eUICC1 envoie (C50) une nouvelle requête RQ4 de mise à jour de son système d'exploitation OS1. En réponse à cette requête RQ4 reçue en B50, le serveur SV2 envoie (B52) une mise à jour UPD2 du système d'exploitation OS1 que le module eUICC1 reçoit en C52. Les étapes C50-C52 et B50-B52 sont par exemple réalisées respectivement de façon identique aux étapes C8-C10 et B8-B10 précédemment décrites en référence aux **figures 6****,** **8** et **10****.**

Si une mise à jour UPD2 est effectivement reçue en C52, le module eUICC1 installe (C54) cette mise à jour de la même façon que l'étape de mise à jour C12 décrite précédemment, puis détermine (C56) si chaque service optionnel S du profil P1 est à présent supporté par le système d'exploitation OS1 (de la même manière qu'à l'étape C30 précédemment décrite). Si tel est le cas, le procédé se poursuit en C58. Dans le cas contraire, le procédé prend fin.

En C58, le module eUICC1 se configure en mode MD1 d'utilisation non-restreinte du profil P1 et, éventuellement, modifie le marquage (ou supprime le marquage) du profil P1 précédemment réalisé en C40 (**figure 10**) de sorte à indiquer que chaque service optionnel S du profil P1 (à savoir les services S3, S4 dans cet exemple) est supporté par le système d'exploitation OS1.

Le module eUICC1 envoie (C60) une notification MSG3 au serveur SV1 de fourniture de profil pour lui indiquer qu'il fonctionne à présent en mode MD1 d'utilisation non-restreinte vis-à-vis du profil P1. Suite à cette notification MSG3 reçue en A60, le serveur SV1 envoie (A62) éventuellement un message d'acquittement MSG4, reçue par le module eUICC1 en C62.

## Revendications

1. Procédé de contrôle mis en œuvre par un module d'identité de souscripteur embarqué (eUICC1) apte à coopérer avec un terminal de communication (T), ledit procédé comprenant :
- réception (C2) d'au moins un identifiant (ID) d'un service respectif, d'un profil de communication (P), à mettre en œuvre lorsque ledit profil de communication est installé et à l'état actif dans le module d'identité de souscripteur embarqué ;
le procédé étant **caractérisé en ce qu'**il comprend en outre :
- détermination (C4) de si chaque service (S) est supporté par un système d'exploitation (OS1) du module d'identité de souscripteur embarqué ;
- dans la négative, envoi (C8) d'une requête de mise à jour du système d'exploitation ;
- si une mise à jour (UPD) du système d'exploitation est reçue (C10) en réponse audit envoi (C8), installation (C12) de ladite mise à jour permettant au système d'exploitation de mettre en œuvre au moins partiellement ledit profil de communication (P) ; et
- après achèvement de ladite installation, envoi (C14) d'une demande pour recevoir ou poursuivre la réception du profil de communication (P), incluant ledit au moins un service (S), à installer dans ledit module d'identité de souscripteur embarqué.

2. Procédé selon la revendication 1, comprenant, en réponse à ladite demande pour recevoir ou poursuivre ladite réception, une réception (C16) de tout ou partie du profil de communication de sorte à permettre l'installation du profil dans le module d'identité de souscripteur embarqué.

3. Procédé selon la revendication 1 ou 2, comprenant l'installation (C18) du profil de communication (P) dans le module d'identité de souscripteur embarqué une fois ledit profil obtenu dans sa totalité.

4. Procédé selon l'une quelconque des revendications 1 à 3, ledit profil de communication autorisant, lorsqu'il est installé et à l'état actif dans le module d'identité de souscripteur embarqué, le terminal de communication à communiquer avec un réseau de communication (R) associé audit profil de communication.

5. Procédé selon l'une quelconque des revendications 1 à 4, dans lequel le procédé comprend une comparaison des capacités du système d'exploitation avec chaque service (S) associé audit au moins un identifiant (ID) ;
la détermination de si au moins un dit service (S) n'est pas supporté par le système d'exploitation étant réalisée à partir du résultat de ladite comparaison.

6. Procédé selon l'une quelconque des revendications 1 à 5, dans lequel la réception dudit au moins un identifiant comprend la réception d'une première portion du profil de communication, ladite première portion comportant ledit au moins un identifiant.

7. Procédé selon la revendication 6, la première portion étant une portion d'entête du profil de communication.

8. Procédé selon la revendication 6 ou 7, le procédé comprenant, après achèvement de ladite installation de la mise à jour, l'envoi de ladite demande pour poursuivre la réception du profil de communication (P1) afin de recevoir au moins une deuxième portion (PR2) du profil de communication complétant ladite première portion (PR1) de sorte à obtenir la totalité du profil de communication (P1) à installer dans le module d'identité de souscripteur embarqué.

9. Procédé selon l'une quelconque des revendications 1 à 8, dans lequel ledit au moins un identifiant (ID) est reçu en provenance d'un serveur de fourniture de profil (SV1), le procédé comprenant, si au moins un dit service (S) n'est pas supporté par le système d'exploitation (OS1), l'envoi (C7) d'une demande (RQ2) de mise en attente au serveur de fourniture de profil afin de différer la réception d'au moins une partie (PR2) du profil de communication.

10. Procédé selon l'une quelconque des revendications 1 à 9, dans lequel, lors de la réception dudit au moins un identifiant, le procédé comprend :
- réception (C2), en association avec chaque identifiant (ID) de service, d'un degré d'importance (DG) dudit service, ledit degré d'importance indiquant si le service correspondant doit obligatoirement être supporté par le système d'exploitation (OS1) lorsque le profil de communication est installé dans le module d'identité de souscripteur embarqué.

11. Procédé selon la revendication 10, dans lequel le module d'identité de souscripteur embarqué procède à l'envoi (C14) de ladite demande (RQ3) pour recevoir ou poursuivre la réception du profil de communication (P1) uniquement si le système d'exploitation (OS1), une fois mis à jour, supporte au moins chaque service (S1, S2) du profil de communication indiqué par le degré d'importance (DG1, DG2) associé comme devant être obligatoirement supporté par le système d'exploitation.

12. Procédé selon la revendication 10 ou 11, dans lequel si le système d'exploitation (OS1), une fois mis à jour, ne supporte pas au moins un service (S4) du profil de communication indiqué par le degré d'importance associé (DG4) comme ne devant pas obligatoirement être supporté par le système d'exploitation, le module d'identité de souscripteur embarqué :
- procède à l'envoi (C14) de ladite demande pour recevoir ou poursuivre la réception du profil de communication (P1) ; et
- réalise (C40) un marquage du profil de communication (P1), une fois ledit profil installé dans le module d'identité de souscripteur embarqué, de sorte à indiquer qu'au moins un service (S4) du profil de communication, ne devant pas être obligatoirement supporté par ledit système d'exploitation, n'est pas supporté par ledit système d'exploitation.

13. Procédé selon la revendication 12, dans lequel le marquage (C40) comprend une modification, dans le profil de communication (P1) installé dans le module d'identité de souscripteur embarqué, d'un paramètre pour indiquer que le module d'identité de souscripteur embarqué est configuré pour mettre en œuvre de façon restreinte ledit au moins un service du profil de communication.

14. Procédé selon l'une quelconque des revendications 10 à 13, dans lequel si le système d'exploitation (OS1), une fois mis à jour, ne supporte pas au moins un service (S4) du profil de communication (P1) indiqué par le degré d'importance associé (DG4) comme ne devant pas obligatoirement être supporté par le système d'exploitation, le procédé comprend :
- envoi d'une notification indiquant que le module d'identité de souscripteur embarqué est configuré pour mettre en œuvre ledit au moins un service du profil de communication de façon restreinte.

15. Procédé selon l'une quelconque des revendications 10 à 14, dans lequel, lors de ladite réception (C2), ledit au moins un identifiant (ID) et chaque degré d'importance associé (DG) est reçu dans un entête (PR1) dudit profil de communication (P1), ledit entête comprenant en outre un paramètre (PR),
dans lequel, après achèvement de ladite installation (C12) de la mise à jour, le module d'identité de souscripteur embarqué (eUICC1) envoie (C14) ladite demande pour poursuivre la réception du profil de communication (P) seulement si le paramètre (PR) est dans un état prédéfini.

16. Programme d'ordinateur (OS1 ; OS3) comportant des instructions pour l'exécution des étapes d'un procédé de contrôle selon l'une quelconque des revendications 1 à 15 lorsque ledit programme est exécuté par un ordinateur.

17. Module d'identité de souscripteur embarqué apte à coopérer avec un terminal de communication (T), ledit module d'identité de souscripteur embarqué comprenant :
- un module de réception (MD2) configuré pour recevoir au moins un identifiant (ID) d'un service respectif, d'un profil de communication (P), à mettre en œuvre lorsque ledit profil de communication est installé et à l'état actif dans le module d'identité de souscripteur embarqué ;
le module d'identité de souscripteur embarqué étant **caractérisé en ce qu'**il comprend en coutre :
- un module de détermination (MD4) configuré pour déterminer si chaque service est supporté par un système d'exploitation (OS1) du module d'identité de souscripteur embarqué ;
- un module de mise à jour (MD6) configuré, si chaque service n'est pas supporté par ledit système d'exploitation, pour envoyer une requête de mise à jour du système d'exploitation,
ledit module de mise à jour (MD6) étant configuré, si une mise à jour (UPD) du système d'exploitation est reçue en réponse à ladite requête de mise à jour, pour installer ladite mise à jour permettant au système d'exploitation de mettre en œuvre au moins partiellement ledit profil de communication (P) ; et
- un module d'envoi (MD8) configuré, après achèvement de ladite installation de mise à jour, pour envoyer une demande pour recevoir ou poursuivre la réception du profil de communication (P), incluant ledit au moins un service (S), à installer dans ledit module d'identité de souscripteur embarqué.

18. Système (SY) **caractérisé en ce qu'**il comprend un module d'identité de souscripteur embarqué selon la revendication 17 et un serveur de fourniture de profil pour fournir un profil de communication audit module d'identité de souscripteur embarqué coopérant avec un terminal de communication,
ledit serveur de fourniture de profil comprenant :
- un module d'envoi, audit module d'identité de souscripteur embarqué, d'au moins un identifiant d'un service respectif, d'un profil de communication, à mettre en œuvre lorsque ledit profil de communication est installé et à l'état actif dans le module d'identité de souscripteur embarqué ;
le module d'envoi étant configuré pour mettre en attente l'envoi d'au moins une partie du profil de communication au module d'identité de souscripteur embarqué ; et
- un module de réception configuré, après mise à jour dudit système d'exploitation par le module d'identité de souscripteur embarqué, pour recevoir une demande d'envoi ou de poursuite d'envoi du profil de communication, incluant ledit au moins un service ; et
le module d'envoi étant configuré, en réponse à ladite demande d'envoi ou de poursuite d'envoi du profil de communication, pour envoyer tout ou partie du profil de communication afin de permettre l'installation dudit profil dans le module d'identité de souscripteur embarqué.

## Patentansprüche

1. Steuerverfahren, das durch ein eingebettetes Teilnehmeridentitätsmodul (eUICC1) ausgeführt wird, das geeignet ist, mit einem Kommunikationsendgerät (T) zusammenzuwirken, wobei das Verfahren umfasst:
- Empfangen (C2) von mindestens einer Kennung (ID) eines entsprechenden Dienstes eines Kommunikationsprofils (P), das umzusetzen ist, wenn das Kommunikationsprofil in dem eingebetteten Teilnehmeridentitätsmodul installiert und im aktiven Zustand ist,
wobei das Verfahren **dadurch gekennzeichnet ist, dass** es ferner umfasst:
- Bestimmen (C4), ob jeder Dienst (S) durch ein Betriebssystem (OS1) des eingebetteten Teilnehmeridentitätsmoduls unterstützt wird,
- falls dies nicht der Fall ist, Senden (C8) einer Anforderung zur Aktualisierung des Betriebssystems,
- wenn eine Aktualisierung (UPD) des Betriebssystems als Reaktion auf das Senden (C8) empfangen wird (C10), Installieren (C12) der Aktualisierung, die es dem Betriebssystem ermöglicht, das Kommunikationsprofil (P) zumindest teilweise umzusetzen, und
- nach Beendigung der Installation, Senden (C14) einer Anfrage zum Empfangen oder Fortsetzen des Empfangs des den mindestens einen Dienst (S) beinhaltenden Kommunikationsprofils (P), das in dem eingebetteten Teilnehmeridentitätsmodul zu installieren ist.

2. Verfahren nach Anspruch 1, das als Reaktion auf die Anfrage zum Empfangen oder Fortsetzen des Empfangs einen Empfang (C16) des gesamten Kommunikationsprofils oder eines Teils davon umfasst, derart dass die Installation des Profils in dem eingebetteten Teilnehmeridentitätsmodul ermöglicht wird.

3. Verfahren nach Anspruch 1 oder 2, das die Installation (C18) des Kommunikationsprofils (P) in dem eingebetteten Teilnehmeridentitätsmodul umfasst, nachdem das Profil in seiner Gesamtheit erhalten wurde.

4. Verfahren nach einem der Ansprüche 1 bis 3, wobei das Kommunikationsprofil, wenn es in dem eingebetteten Teilnehmeridentitätsmodul installiert und im aktiven Zustand ist, dem Kommunikationsendgerät erlaubt, mit einem dem Kommunikationsprofil zugehörigen Kommunikationsnetz (R) zu kommunizieren.

5. Verfahren nach einem der Ansprüche 1 bis 4, wobei das Verfahren einen Vergleich der Fähigkeiten des Betriebssystems mit jedem der mindestens einen Kennung (ID) zugehörigen Dienst (S) umfasst,
wobei die Bestimmung, ob mindestens ein Dienst (S) nicht durch das Betriebssystem unterstützt wird, ausgehend von dem Ergebnis des Vergleichs ausgeführt wird.

6. Verfahren nach einem der Ansprüche 1 bis 5, wobei der Empfang der mindestens einen Kennung den Empfang eines ersten Abschnitts des Kommunikationsprofils umfasst, wobei der erste Abschnitt die mindestens eine Kennung enthält.

7. Verfahren nach Anspruch 6, wobei der erste Abschnitt ein Kopfabschnitt des Kommunikationsprofils ist.

8. Verfahren nach Anspruch 6 oder 7, wobei das Verfahren nach der Beendigung der Installation der Aktualisierung das Senden der Anfrage zum Fortsetzen des Empfangs des Kommunikationsprofils (P1) umfasst, um mindestes einen zweiten Abschnitt (PR2) des Kommunikationsprofils zu empfangen, der den ersten Abschnitt (PR1) ergänzt, derart dass die Gesamtheit des in dem eingebetteten Teilnehmeridentitätsmodul zu installierenden Kommunikationsprofils (P1) erhalten wird.

9. Verfahren nach einem der Ansprüche 1 bis 8, wobei die mindestens eine Kennung (ID) von einem Profillieferungsserver (SV1) empfangen wird, wobei das Verfahren, wenn der mindestens eine Dienst (S) nicht durch das Betriebssystem (OS1) unterstützt wird, das Senden (C7) einer Anfrage (RQ2) zum Versetzen in den Wartezustand an den Profillieferungsserver umfasst, um den Empfang von mindestens einem Teil (PR2) des Kommunikationsprofils zu verschieben.

10. Verfahren nach einem der Ansprüche 1 bis 9, wobei das Verfahren beim Empfang der mindestens einen Kennung umfasst:
- Empfang (C2), in Verbindung mit jeder Dienstkennung (ID), eines Wichtigkeitsgrads (DG) des Dienstes, wobei der Wichtigkeitsgrad angibt, ob der entsprechende Dienst zwingend durch das Betriebssystem (OS1) unterstützt werden muss, wenn das Kommunikationsprofil in dem eingebetteten Teilnehmeridentitätsmodul installiert ist.

11. Verfahren nach Anspruch 10, wobei das eingebettete Teilnehmeridentitätsmodul das Senden (C14) der Anfrage (RQ3) zum Empfangen oder Fortsetzen des Empfangs des Kommunikationsprofils (P1) nur vornimmt, wenn das Betriebssystem (OS1), nachdem es aktualisiert wurde, mindestens jeden Dienst (S1, S2) des Kommunikationsprofils unterstützt, der durch den zugehörigen Wichtigkeitsgrad (DG1, DG2) als zwingend durch das Betriebssystem zu unterstützen angegeben wird.

12. Verfahren nach Anspruch 10 oder 11, wobei, wenn das Betriebssystem (OS1), nachdem es aktualisiert wurde, mindestens einen Dienst (S4) des Kommunikationsprofils nicht unterstützt, der durch den zugehörigen Wichtigkeitsgrad (DG4) als nicht zwingend durch das Betriebssystem zu unterstützen angegeben wird, das eingebettete Teilnehmeridentitätsmodul:
- das Senden (C14) der Anfrage zum Empfangen oder Fortsetzen des Empfangs des Kommunikationsprofils (P1) vornimmt, und
- ein Marken (C40) des Kommunikationsprofils (P1) ausführt, nachdem das Profil in dem eingebetteten Teilnehmeridentitätsmodul installiert wurde, derart dass angegeben wird, dass mindestens ein Dienst (S4) des Kommunikationsprofils, der nicht zwingend durch das Betriebssystem unterstützt werden muss, nicht durch das Betriebssystem unterstützt wird.

13. Verfahren nach Anspruch 12, wobei das Marken (C40) ein Ändern eines Parameters im in dem eingebetteten Teilnehmeridentitätsmodul installierten Kommunikationsprofil (P1) umfasst, um anzugeben, dass das eingebettete Teilnehmeridentitätsmodul dazu ausgestaltet ist, den mindestens einen Dienst des Kommunikationsprofils auf eingeschränkte Weise umzusetzen.

14. Verfahren nach einem der Ansprüche 10 bis 13, wobei, wenn das Betriebssystem (OS1), nachdem es aktualisiert wurde, mindestens einen Dienst (S4) des Kommunikationsprofils (P1) nicht unterstützt, der durch den zugehörigen Wichtigkeitsgrad (DG4) als nicht zwingend durch das Betriebssystem zu unterstützen angegeben ist, das Verfahren umfasst:
- Senden einer Benachrichtigung, die angibt, dass das eingebettete Teilnehmeridentitätsmodul dazu ausgestaltet ist, den mindestens einen Dienst des Kommunikationsprofils auf eingeschränkte Weise umzusetzen.

15. Verfahren nach einem der Ansprüche 10 bis 14, wobei beim Empfang (C2) die mindestens eine Kennung (ID) und jeder zugehörige Wichtigkeitsgrad (DG) in einem Kopf (PR1) des Kommunikationsprofils (P1) empfangen wird, wobei der Kopf ferner einen Parameter (PR) umfasst,
wobei nach Beendigung der Installation (C12) der Aktualisierung das eingebettete Teilnehmeridentitätsmodul (eUICC1) die Anfrage zum Fortsetzen des Empfangs des Kommunikationsprofils (P) nur sendet (C14), wenn der Parameter (PR) sich in einem vordefinierten Zustand befindet.

16. Computerprogramm (OS1; OS3), das Befehle zur Ausführung der Schritte eines Steuerverfahrens nach einem der Ansprüche 1 bis 15 beinhaltet, wenn das Programm von einem Computer ausgeführt wird.

17. Eingebettetes Teilnehmeridentitätsmodul, das geeignet ist, mit einem Kommunikationsendgerät (T) zusammenzuwirken, wobei das eingebettete Teilnehmeridentitätsmodul umfasst:
- ein Empfangsmodul (MD2), das dazu ausgestaltet ist, mindestens eine Kennung (ID) eines entsprechenden Dienstes eines Kommunikationsprofils (P) zu empfangen, das umzusetzen ist, wenn das Kommunikationsprofil in dem eingebetteten Teilnehmeridentitätsmodul installiert und im aktiven Zustand ist,
wobei das eingebettete Teilnehmeridentitätsmodul **dadurch gekennzeichnet ist, dass** es ferner umfasst:
- ein Bestimmungsmodul (MD4), das dazu ausgestaltet ist, zu bestimmen, ob jeder Dienst durch ein Betriebssystem (OS1) des eingebetteten Teilnehmeridentitätsmoduls unterstützt wird,
- ein Aktualisierungsmodul (MD6), das dazu ausgestaltet ist, wenn nicht jeder Dienst durch das Betriebssystem unterstützt wird, eine Anforderung zur Aktualisierung des Betriebssystems zu senden,
wobei das Aktualisierungsmodul (MD6) dazu ausgestaltet ist, wenn eine Aktualisierung (UPD) des Betriebssystems als Reaktion auf die Anforderung zur Aktualisierung empfangen wird, die Aktualisierung zu installieren, die es dem Betriebssystem ermöglicht, das Kommunikationsprofil (P) zumindest teilweise umzusetzen, und
- ein Sendemodul (MD8), das dazu ausgestaltet ist, nach Beendigung der Installation der Aktualisierung eine Anfrage zum Empfangen oder Fortsetzen des Empfangs des den mindestens einen Dienst (S) beinhaltenden Kommunikationsprofils (P), das in dem eingebetteten Teilnehmeridentitätsmodul zu installieren ist, zu senden.

18. System (SY), **dadurch gekennzeichnet, dass** es ein eingebettetes Teilnehmeridentitätsmodul nach Anspruch 17 und einen Profillieferungsserver zum Liefern eines Kommunikationsprofils an das eingebettete Teilnehmeridentifikationsmodul umfasst, das mit einem Kommunikationsendgerät zusammenwirkt,
wobei der Profillieferungsserver umfasst:
- ein Modul zum Senden mindestens einer Kennung eines entsprechenden Dienstes eines Kommunikationsprofils, das umzusetzen ist, wenn das Kommunikationsprofil in dem eingebetteten Teilnehmeridentifikationsmodul installiert und im aktiven Zustand ist, an das eingebettete Teilnehmeridentifikationsmodul,
wobei das Sendemodul dazu ausgestaltet ist, das Senden von mindestens einem Teil des Kommunikationsprofils an das eingebettete Teilnehmeridentifikationsmodul in den Wartezustand zu versetzen, und
- ein Empfangsmodul, das dazu ausgestaltet ist, nach der Aktualisierung des Betriebssystems durch das eingebettete Teilnehmeridentitätsmodul eine Anfrage zum Senden oder zur Fortsetzung des Sendens des Kommunikationsprofils zu empfangen, das den mindestens einen Dienst beinhaltet, und
wobei das Sendemodul dazu ausgestaltet ist, als Reaktion auf die Anfrage zum Senden oder zur Fortsetzung des Sendens des Kommunikationsprofils das gesamte Kommunikationsprofil oder einen Teil davon zu senden, um die Installation des Profils in dem eingebetteten Teilnehmeridentifikationsmodul zu ermöglichen.

## Claims

1. A monitoring method implemented by an embedded subscriber identity module (eUICC1) capable of cooperating with a communication terminal (T), said method comprising:
- receiving (C2) of at least one identifier (ID) of a respective service, of a communication profile (P), to be implemented when said communication profile is installed and in the active state in the embedded subscriber identity module;
the method being **characterized in that** it further comprises:
- determining (C4) whether each service (S) is supported by an operating system (OS1) of the embedded subscriber identity module;
- if not, sending (C8) a request to update the operating system;
- if an update (UPD) of the operating system is received (C10) in response to said sending (C8), installing (C12) said update allowing the operating system to at least partially implement said communication profile (P); and
- after completion of said installation, sending (C14) a request to receive or continue the receipt of the communication profile (P), including said at least one service (S), to be installed in said embedded subscriber identity module.

2. The method according to claim 1, comprising, in response to said request to receive or continue said receipt, receiving (C16) all or part of the communication profile so as to allow the installation of the profile in the embedded subscriber identity module.

3. The method according to claim 1 or 2, comprising installing (C18) the communication profile (P) in the embedded subscriber identity module once said profile is obtained in its entirety.

4. The method according to any one of claims 1 to 3, said communication profile authorizing, when installed and in the active state in the embedded subscriber identity module, the communication terminal to communicate with a communication network (R) associated with said communication profile.

5. The method according to any one of claims 1 to 4, wherein the method comprises a comparison of the capabilities of the operating system with each service (S) associated with said at least one identifier (ID);
the determination of whether at least one said service (S) is not supported by the operating system being made based on the result of said comparison.

6. The method according to any one of claims 1 to **5,** wherein the receiving said at least one identifier comprises receiving a first portion of the communication profile, said first portion including said at least one identifier.

7. The method according to claim 6, the first portion being a header portion of the communication profile.

8. The method according to claim 6 or 7, the method comprising, after completion of said installation of the update, sending said request to continue the receipt of the communication profile (P1) in order to receive at least a second portion (PR2) of the communication profile supplementing said first portion (PR1) so as to obtain the entire communication profile (P1) to be installed in the embedded subscriber identity module.

9. The method according to any one of claims 1 to 8, wherein said at least one identifier (ID) is received from a profile providing server (SV1), the method comprising, if at least one said service (S) is not supported by the operating system (OS1), sending (C7) a hold request (RQ2) to the profile providing server in order to defer the receipt of at least one portion (PR2) of the communication profile.

10. The method according to any one of claims 1 to 9, wherein, during the receiving said at least one identifier, the method comprises:
- receiving (C2), in association with each service identifier (ID), of a degree of importance (DG) of said service, said degree of importance indicating whether the corresponding service must be imperatively supported by the operating system (OS1) when the communication profile is installed in the embedded subscriber identity module.

11. The method according to claim 10, wherein the embedded subscriber identity module carries out the sending (C14) of said request (RQ3) to receive or continue the receipt of the communication profile (P1) only if the operating system (OS1), once updated, supports at least each service (S1, S2) of the communication profile indicated by the associated degree of importance (DG1, DG2) as having to be imperatively supported by the operating system.

12. The method according to claim 10 or 11, wherein if the operating system (OS1), once updated, does not support at least one service (S4) of the communication profile indicated by the associated degree of importance (DG4) as not having to be imperatively supported by the operating system, the embedded subscriber identity module:
- carries out the sending (C14) of said request to receive or continue the receipt of the communication profile (P1); and
- performs (C40) a marking of the communication profile (P1), once said profile is installed in the embedded subscriber identity module, so as to indicate that at least one service (S4) of the communication profile, not having to be imperatively supported by said operating system, is not supported by said operating system.

13. The method according to claim 12, wherein the marking (C40) comprises a modification, in the communication profile (P1) installed in the embedded subscriber identity module, of a parameter to indicate that the embedded subscriber identity module is configured to implement on a restricted basis said at least one service of the communication profile.

14. The method according to any one of claims 10 to 13, wherein if the operating system (OS1), once updated, does not support at least one service (S4) of the communication profile (P1) indicated by the associated degree of importance (DG4) as not having to be imperatively supported by the operating system, the method comprises:
- sending of a notification indicating that the embedded subscriber identity module is configured to implement said at least one service of the communication profile on a restricted basis.

15. The method according to any one of claims 10 to 14, wherein, during said receipt (C2), said at least one identifier (ID) and each associated degree of importance (DG) is received in a header (PR1) of said communication profile (P1), said header further comprising a parameter (PR),
wherein, after completion of said installation (C12) of the update, the embedded subscriber identity (eUICC1) module sends (C14) said request to continue the receipt of the communication profile (P) only if the parameter (PR) is in a predefined state.

16. A computer program (OS1; OS3) including instructions for the execution of the steps of a monitoring method according to any one of claims 1 to 15 when said program is run by a computer.

17. An embedded subscriber identity module capable of cooperating with a communication terminal (T), said embedded subscriber identity module comprising:
- a receipt module (MD2) configured to receive at least one identifier (ID) of a respective service, of a communication profile (P), to be implemented when said communication profile is installed and in the active state in the embedded subscriber identity module;
the embedded subscriber identity module being **characterized in that** it further comprises:
- a determination module (MD4) configured to determine whether each service is supported by an operating system (OS1) of the embedded subscriber identity module;
- an update module (MD6) configured, if each service is not supported by said operating system, to send a request to update the operating system,
said update module (MD6) being configured, if an update (UPD) of the operating system is received in response to said update request, to install said update allowing the operating system to at least partially implement said communication profile (P); and
- a sending module (MD8) configured, after completion of said update installation, to send a request to receive or continue the receipt of the communication profile (P), including said at least one service (S), to be installed in said embedded subscriber identity module.

18. A system (SY) **characterized in that** it comprises an embedded subscriber identity module according to claim 17 and a profile providing server to provide a communication profile to said embedded subscriber identity module cooperating with a communication terminal,
said profile providing server comprising:
- a module for sending, to said embedded subscriber identity module, at least one identifier of a respective service, of a communication profile, to be implemented when said communication profile is installed and in the active state in the embedded subscriber identity module;
the sending module being configured to put on hold the sending of at least one portion of the communication profile to the embedded subscriber identity module; and
- a receipt module configured, after update of said operating system by the embedded subscriber identity module, to receive a request to send or continue the sending of the communication profile, including said at least one service ; and
the sending module being configured, in response to said request to send or continue the sending of the communication profile, to send all or part of the communication profile in order to allow the installation of said profile in the embedded subscriber identity module.
